# EUROPEAN PATENT APPLICATION

(11) **EP 4 459 398 A1**
(43) Date of publication of application: **06.11.2024**
(21) Application number: 22922891.1
(22) Date of filing: 29.01.2022
(51) Int. Cl.: G05B 19/418, G06Q 10/10

(54) **WORKFLOW GENERATION METHOD, DEVICE AND SYSTEM, MEDIUM, AND PROGRAM PRODUCT**

(71) Applicant: Siemens Aktiengesellschaft, 80333 München (DE)
(72) Inventor: ZHOU, Zhenhua, Shanghai 200120 (CN); ZHU, Xiaoxun, Beijing 100102 (CN)
(74) Representative: Isarpatent
(86) International application number: PCT/CN2022/075054
(87) International publication number: WO 2023/142061

(57) **Abstract**

Embodiments of the present application disclose a workflow generation method, device and system, a medium, and a program product. The method comprises: receiving a behavior tree construction operation performed by a user on a graphical user interface, wherein the construction operation comprises an addition operation of a behavior tree node, the behavior tree node comprises a first decorator node, and the first decorator node comprises a first working link and a first decorative layer adapted to decorate the first working link; in response to the construction operation of the behavior tree, generating a behavior tree comprising the first decorator node; and analyzing the behavior tree to generate a workflow, wherein the workflow instructs the first working link to work under the decoration of the first decorative layer. The decorator node having a decoration function are realized, the control logic of the working link is enriched, and the flexible control of the workflow is facilitated.

## Description

### TECHNICAL FIELD

Embodiments of the present application relate to the field of industrial technologies, and in particular, to a workflow generation method and apparatus, a system, a computer-readable storage medium, and a computer program product.

### BACKGROUND

A workflow may be simply defined as a description of a series of operational processes. The workflow is widely used in an automation system, artificial intelligence, robotics, and other fields. For example, the workflow of a product sorting line in the automation system may be simply described as starting, photographing, sorting, and moving a product to a target location. A model deployment workflow in the field of artificial intelligence may be described as data collection, data annotation, model training, and model deployment.

However, at present, these workflows only have text descriptions. If users desire to execute such workflows, the users need to follow the text descriptions, and may use a variety of engineering tools. However, these tools are almost unrelated to each other and provide completely different user operation behaviors, which is not only a challenge to users, but also greatly increases costs, reduces efficiency, and limits flexibility due to a long development cycle. For example, in the field of artificial intelligence, users need to perform data collection using one tool, perform data annotation manually or using other tools, perform model training by writing python scripts, and perform deployment using a deployment tool.

To this end, a person skilled in the art is also working to find other workflow solutions.

### SUMMARY

Embodiments of the present application provide a workflow generation method, a system, a computer-readable storage medium, and a computer program product.

In a first aspect, implementations of the present disclosure provide a workflow generation method, including:
receiving a behavior tree construction operation performed by a user on a graphical user interface, where the construction operation includes an addition operation for a behavior tree node, the behavior tree node includes a first decorator node, and the first decorator node includes a first worklink and a first decorative layer adapted to decorating the first worklink;
generating, in response to the behavior tree construction operation, a behavior tree including the first decorator node; and
parsing the behavior tree to generate a workflow, where the workflow instructs the first worklink to work under the decoration of the first decorative layer.

Therefore, implementations of the present disclosure provide a workflow generation mode based on decorator nodes, so that the control logic of worklinks is enriched, and a workflow can be flexibly controlled.

In one implementation, the first decorative layer includes a first decorator expression, where the process of the first worklink working under the decoration of the first decorative layer includes at least one of the following:
determining execution condition of the first worklink based on the first decorator expression;
determining number of executions of the first worklink based on the first decorator expression;
determining execution time of the first worklink based on the first decorator expression; and
determining execution state of the first worklink based on the first decorator expression.

Therefore, in implementations of the present disclosure, worklinks are decorated in various forms by using decorator expressions, so that control functions of the worklinks are enriched.

In one implementation, the first worklink includes a function block node. The function block node is configured to implement a service operation in the workflow.

It can be seen that in implementations of the present disclosure, function block nodes in worklinks may be decorated.

In one implementation, the first worklink includes a compositor node. The compositor node includes a start block adapted to starting executing the compositor node, an end block adapted to ending executing the compositor node, and a plurality of candidate worklinks arranged between the start block and the end block.

The workflow also instructs to determine a destination worklink from the plurality of candidate worklinks based on a type of the compositor node.

Therefore, in implementations of the present disclosure, compositor nodes in worklinks may be decorated.

In one implementation, the first worklink includes a second decorator node. The second decorator node includes a second worklink and a second decorative layer adapted to decorating the second worklink.

The workflow instructs the second worklink to work under the decoration of the second decorative layer.

It can be seen that implementations of the present disclosure also realize the nesting of decorators and enrich the control logic for worklinks.

In one implementation, the first worklink includes an iterator node. The iterator node includes an input end adapted to receiving an iterative item list, and an iterative worklink. The iterative item list includes a plurality of iterative items and an execution sequence of each iterative item.

The workflow also instructs each iterative item to execute the iterative worklink based on the respective execution sequence in the iterative item list during an execution process of the first worklink.

It can be seen that in implementations of the present disclosure, iterator nodes in worklinks may be decorated.

In one implementation, the method further includes:
deploying the workflow onto a runtime containing a workcell, such that the workcell performs operations according to the workflow, where the workflow is an OT domain workflow, and the workcell is an OT device.

Therefore, by deploying a workflow onto a runtime of an OT device, an OT domain workflow may be controlled.

In one implementation, the first decorator node is selected based on a selection operation performed by the user on the graphical user interface including a node library.

Therefore, through a selection operation on a node library, decorator nodes may be intuitively selected.

In one implementation, the first decorator node includes a first display area and a second display area. The first display area is adapted to displaying a type of the first decorator node, and the second display area is adapted to displaying the first decorator expression.

It can be seen that various types of information may also be displayed on decorator nodes, such that users can understand execution states of the decorator nodes.

In a second aspect, implementations of the present disclosure provide a workflow generation apparatus, including:
a receiving module, configured to receive a behavior tree construction operation performed by a user on a graphical user interface, where the construction operation includes an addition operation for a behavior tree node, the behavior tree node includes a first decorator node, and the first decorator node includes a first worklink and a first decorative layer adapted to decorating the first worklink;
a behavior tree generation module, configured to generate, in response to the behavior tree construction operation, a behavior tree including the first decorator node; and
a workflow generation module, configured to parse the behavior tree to generate a workflow, where the workflow instructs the first worklink to work under the decoration of the first decorative layer.

Therefore, the present disclosure provides a workflow generation mode based on decorator nodes, so that the control logic of worklinks is enriched, and a workflow can be flexibly controlled.

In one implementation, the first decorative layer includes a first decorator expression, where the process of the first worklink working under the decoration of the first decorative layer includes at least one of the following:
determining an execution condition of the first worklink based on the first decorator expression;
determining a number of executions of the first worklink based on the first decorator expression;
determining an execution time of the first worklink based on the first decorator expression; and
determining an execution state of the first worklink based on the first decorator expression.

Therefore, in implementations of the present disclosure, worklinks may be decorated in various forms by using decorator expressions, so that control functions of the worklinks are enriched.

In one implementation, the first worklink includes a function block node. The function block node is configured to implement a service operation in the workflow. Alternatively, the first worklink includes a compositor node. The compositor node includes a start block adapted to starting executing the compositor node, an end block adapted to ending executing the compositor node, and a plurality of candidate worklinks arranged between the start block and the end block. The workflow also instructs to determine a destination worklink from the plurality of candidate worklinks based on a type of the compositor node. Alternatively, the first worklink includes a second decorator node. The second decorator node includes a second worklink and a second decorative layer adapted to decorating the second worklink, where the workflow instructs the second worklink to work under the decoration of the second decorative layer. Alternatively, the first worklink includes an iterator node. The iterator node includes an input end adapted to receiving an iterative item list, and an iterative worklink. The iterative item list includes a plurality of iterative items and an execution sequence of each iterative item, where the workflow also instructs each iterative item to execute the iterative worklink based on the respective execution sequence in the iterative item list during an execution process of the first worklink.

Therefore, various types of nodes in worklinks may be decorated in multiple styles.

In one implementation, the method further includes:
a deployment module, configured to deploy the workflow onto a runtime containing a workcell, such that the workcell performs operations according to the workflow, where the workflow is an OT domain workflow, and the workcell is an OT device.

Therefore, by deploying a workflow onto a runtime of an OT device, an OT domain workflow may be controlled.

In a third aspect, implementations of the present disclosure provide a workflow control system, including:
at least one memory, configured to store computer-readable code; and
at least one processor, configured to call the computer-readable code to perform the steps of the workflow generation method according to any of the foregoing.

In a fourth aspect, implementations of the present disclosure provide a computer-readable medium. The computer-readable medium has computer-readable instructions stored thereon. The computer-readable instructions, when executed by a processor, cause the processor to perform the steps of the workflow generation method according to any of the foregoing.

In a fifth aspect, implementations of the present disclosure provide a computer program product. The computer program product is tangibly stored on a computer-readable medium and includes computer-readable instructions. The computer-readable instructions, when executed, cause at least one processor to perform the steps of the workflow generation method according to any of the foregoing.

### BRIEF DESCRIPTION OF THE DRAWINGS

FIG. 1A is an exemplary flowchart of a workflow creation method according to various embodiments of the present application.
FIG. 1B is an example diagram of a resource knowledge graph in one example of the present application.
FIG. 1C is an example diagram of function block nodes associated with resource nodes in one example of the present application.
FIG. 2A is a schematic diagram of a behavior tree created in one example of the present application.
FIG. 2B to FIG. 2S are schematic diagrams of some behavior trees created in one example of the present application, respectively.
FIG. 3 is an exemplary structural diagram of a workflow creation system according to one embodiment of the present application.
FIGS. 4A-4D are schematic diagrams of a workflow creation system according to various embodiments of the present application.
FIG. 4E is an application scenario diagram of an OT domain low-code development platform 100 in the field of industrial automation.
FIG. 5 is a schematic diagram of a hardware implementation of a workflow creation system according to an embodiment of the present application.
FIG. 6 is an exemplary flowchart of a workflow control method according to various embodiments of the present application.
FIG. 7A is a first schematic diagram of a low-code paradigm of an FBTD logical compositor according to various embodiments of the present application.
FIG. 7B is a second schematic diagram of a low-code paradigm of an FBTD logical compositor according to various embodiments of the present application.
FIG. 7C is a schematic diagram of a low-code paradigm of an FBTD logical compositor having a folding form according to various embodiments of the present application.
FIG. 7D is a schematic diagram of a low-code paradigm of an iterator according to an embodiment of the present application.
FIG. 8 is an exemplary flowchart of a workflow generation method according to an embodiment of the present application.
FIG. 9A is a first schematic diagram of a low-code paradigm of a decorator according to an embodiment of the present application.
FIG. 9B is a second schematic diagram of a low-code paradigm of a decorator according to an embodiment of the present application.
FIG. 10 is an exemplary structural diagram of a workflow generation apparatus according to various embodiments of the present application.

### Reference numerals are as follows:

| | |
|---|---|
| S11-S13 | Steps of workflow generation method |
| 110 | Node library |
| 120 | Graphical interface module |
| 130 | Edit processing module |
| 140 | Parsing deployment module |
| 100 | OT domain low-code development platform |
| 10 | OT domain low-code development tool |
| 20 | OT domain micro-service generator |
| 30 | Runtime on main controller of workcell |
| 40 | Micro-service |
| 50 | Third-party apparatus |
| 200 | Knowledge middleware/ Knowledge middleware flatform |
| 300 | IT domain code development platform |
| 301 | IT domain code development tool |
| 51 | At least one memory |
| 52 | At least one processor |
| 53 | At least one display |
| 54 | Bus |
| 600 | Workflow control method |
| 601-603 | Steps |
| 70 | Compositor node |
| 71 | Start block |
| 72 | End block |
| 73-75 | Function block node |
| 76 | Composition expression |
| 77 | End logical value |
| 78-80 | Data value block |
| 81 | Third display area |
| 82 | Type identifier of folding compositor |
| 83 | Second display area |
| 84 | Switching control |
| 85-86 | Function block node |
| 87 | Composition expression |
| 88 | First display area |
| 90 | Folding box |
| 700 | Workflow generation method |
| 701-703 | Steps |
| 60 | Iterator node |
| 61 | Iterative item list |
| 62 | First display area |
| 63 | Second display area |
| 64-65 | Function block node |
| 66-67 | Pin |
| 400 | Decorator node |
| 401 | First display area |
| 402 | Second display area |
| 403-404 | Function block node |
| 405-406 | Pin |
| 407-409 | Tag |
| 500 | Decorator node |
| 501-502, 504-505 | Function block node |
| 503 | Decorator node |
| 506 | First display area |
| 507 | Second display area |
| 800 | Workflow generation apparatus |
| 801 | Receiving module |
| 802 | Behavior tree generation module |
| 803 | Workflow generation module |
| 804 | Deployment module |

### DETAILED DESCRIPTION

A subject described in this specification is discussed now with reference to exemplary implementations. It will be appreciated that, discussion of the implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of embodiments of the present application. Various processes or components may be omitted, replaced, or added in each example as required. For example, the described method may be performed according to a sequence different from the sequence described herein, and steps may be added, omitted, or combined. In addition, features described in some examples may also be combined in other examples.

As used in this specification, the term "include" and variants thereof represent open terms, and mean "include but not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The following describes the embodiments of the present application in detail with reference to the accompanying drawings.

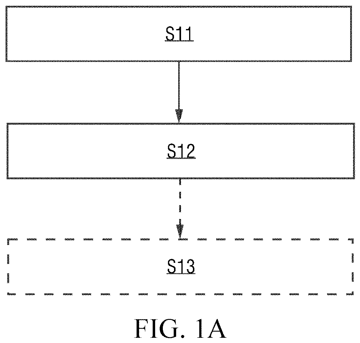

FIG. 1A shows an exemplary flowchart of a workflow creation method according to an embodiment of the present application. As shown in FIG. 1A, the method may include the following steps:
Step S 11: Receive a behavior tree construction operation performed by a user on a graphical user interface based on a preset behavior tree node.

In this embodiment, a behavior tree is configured to characterize a workflow. The workflow is configured to define operations to be executed by a workcell. For example, the workflow may represent distributed processes within the workcell. In specific implementation, the workflow here may also be divided into a main workflow and subworkflows. The main workflow is configured to define the start, end, and other flow controls that trigger the entire workcell process. The main workflow is an entry of the entire process, which is linked to at least one subworkflow. The subworkflows are usually major workflows. Each subworkflow corresponds to a sub-process for implementing specific service operations.

The workcell may be a combination of resources such as systems or devices that can realize a relatively complete and independent control process and operation. In this embodiment, the workflow is created using the workcell as a basic unit, which is more in line with the characteristics of industrial control, can improve the integration degree of development, and can reduce the complexity of development. For example, taking the field of industrial technology as an example, the workcell may be defined according to actual industrial scenarios. For example: it may be defined that one procedure corresponds to one workcell, or it may be defined that one workstation in a procedure is one workcell, or it may be defined that one station in a workstation corresponds to one workcell. Different workcells have different processes.

The behavior tree may be a formal manner of graphical modeling. The behavior tree is widely used for various artificial types of intelligent decision-making. Since most logic is set according to rules, the judgment of behaviors is similar to a tree, with many judgment branches. The behaviors of the behavior tree are on leaf nodes, which are real behavior logic to be executed. Through the behavior tree mode, relevant demands of a software integration system may be clearly expressed using clearly defined symbols. The structure of the behavior tree is organized in the form of a tree, and each node has a corresponding node type, which carries different functions with relevant parameters. An intuitive and visual behavior tree editor may be provided to a user using a component editor. With the behavior tree editor, the user may quickly edit the behavior tree. For example, after starting the behavior tree editor, a new behavior tree may be created, and behavior tree node types are then selected into the behavior tree, where attributes of behavior tree nodes that form the behavior tree may be edited.

In this embodiment, the behavior tree nodes may include: a flow control node, a function block node, and the like. The nodes will be described in detail below.

### 1. Flow Control Node

The flow control node is configured to implement logical control in a workflow, and is typically independent of a specific service operation in a workcell. Through the flow control node, users may create various workflows according to personal demands.

In specific implementation, the flow control node may include: a main control node, a compositor node (which may also be referred to as an aggregator node or a logical control node), a condition node, and the like. Alternatively, the flow control node may include: one or any combination of a main control node, a compositor node, and a condition node. The nodes will be briefly described below, respectively.

### 1. Main Control Node

The main control node may include: some or all of start node, end node, goto node, anchor node, stop node, and abort node.

The main control node in this embodiment is not a standard behavior tree element. However, in this embodiment, the main control node may be configured to control a major process of the workflow and may be linked to a state machine of the workflow. The start node is mandatory, and one of the end node or the goto node may also be mandatory. The main control node is mainly configured to define the start and end of the workflow. Furthermore, other element nodes may control the state machine (e.g., abort and stop) or label key process steps (e.g., key nodes) that may be jumped.

### 2. Compositor Node

The compositor node is configured to implement the logical control in the workflow. The compositor node may include: some or all of a sequence (Se) node, a reactive sequence (RSe) node, a parallel (Pa) node, an in-process quality control (QC) (IPQ) node, a priority (fallback) (Pr) node, a reactive priority (fallback) (RPr) node, an if-then-else (ITE) node, and a switch (Sw) node.

The compositor node may define how to perform branches in the behavior tree, and is configured to implement the branch logical control in the workflow, and the like. For example, a typical compositor node is briefly described below:
1) Sequence Node: The node may have one or more sub-nodes, and will trigger routing to each sub-node sequentially according to the sequence of the workflow.
2) Reactive Sequence Node: The node has the same function as the sequence node, but the trigger conditions will be continuously checked.
3) Parallel Node: The node may have one or more sub-nodes, which are started sequentially from top to bottom, and are all executed simultaneously in multiple processes or multiple threads.
4) In-process Quality Control Node: A quality engineer performs quality inspection on some process steps. If the inspection is failed, an exception handling process will be executed, and if the inspection succeeds, the exception handling process will be continued.
5) Priority Node: Various sub-branches are executed sequentially according to the priority. If a previous sub-branch is failed, a next sub-branch will be executed, and if any branch is OK, the execution is passed.
6) Reactive Priority Node: The node has the same function as the priority node, but the trigger conditions will be continuously checked.
7) If-Then-Else Node: A trigger expression is checked. A true branch is executed if true, and a false branch is executed if false.
8) Switch Node: The trigger expression is checked, and different branches are executed according to different conditions. If none of the conditions is satisfied, a default branch is executed.

Typically, the sequence node and the parallel node may drive most of the logic in the workflow.

### 3. Condition (C) Node

The condition node is usually a basic logical element of a check expression in the behavior tree, and is configured to perform ITE and return a judgment result. OK or failure is returned according to whether the condition is established. The condition node never returns a running state.

Furthermore, in other implementations, the condition node may also be included within a function block node. Alternatively, the condition node may be a type of nodes alone.

### II. Function Block (FB) Node

The function block node is configured to execute commands and implement a service operation in the workflow. Typically, if the operation is completed correctly, OK is returned. If the operation is failed, failure is returned. When the operation is being performed, running is returned.

In this embodiment, the function block node includes a logical node, and may further include some specific types of function block nodes, for example, some or all of a manual node, a dynamic node, a delay node, and an empty (idle) node. The dynamic node is configured to dynamically inject a node instance at a runtime. The manual node represents a manual step, stopping at a current node before obtaining an acknowledgment signal, and exiting after obtaining the acknowledgment signal. The delay node represents exiting the current node after a specified time delay. The idle node represents that no operation is performed, which is a placeholder and may be replaced by any function block node. Each logical node may correspond to an operation template, and each operation template predefines operations that can be executed by at least one type of resources (e.g., a device type such as a cooperative robot type or a PLC type). For example, the operations may include: actions, methods, or skills.

In specific implementation, each operation template may be composed of an interface portion and an implementation portion. The implementation portion may be an application (e.g., a containerized application) containing function code and running dependencies. The application may run independently and be exposed to the public through a specific network communication interface. The interface portion may be a logical node presented as a graphical element. In other words, the logical node, like other behavior tree nodes, may be dragged and dropped, connected, and configured in a graphical user interface. In specific implementation, each logical node may have a parameter panel for configuring parameters of the logical node, for example, input and output parameters. These input and output parameters may also be preset with default values indeed.

Each logical node may be configured and executed individually. When the logical node in the behavior tree is executed, an input configured by a user for the logical node will be read and transmitted to the implementation portion of the operation template, namely, a corresponding application. After completing a specific operation, such as model transformation, an operation result, such as a transformed model, will be transformed back to an output of the logical node.

In this embodiment, the interface portion and the implementation portion of each operation template may be stored individually. For example, only the interface portion, namely, the logical node, may be stored in a node library, and the implementation portion thereof may be stored in a node service module. The node service module may be referred to as a runtime in this embodiment. The node service module may be located in a server or may also be located locally.

Optionally, the logical node follows an information model of interaction with the runtime of a main controller. In this way, communication between an OT domain workflow and main controllers of various OT devices can be standardized.

Furthermore, considering that the service operation corresponding to a function block node may be executed by different bodies, for example, may be a specific physical device, a certain person, or other virtualized noun resources, for convenience of description, these physical devices, personnel, virtualized noun resources, and the like are collectively referred to as resources in this specification. These resources typically refer to resources as each operation subject that can execute the workflow on site.

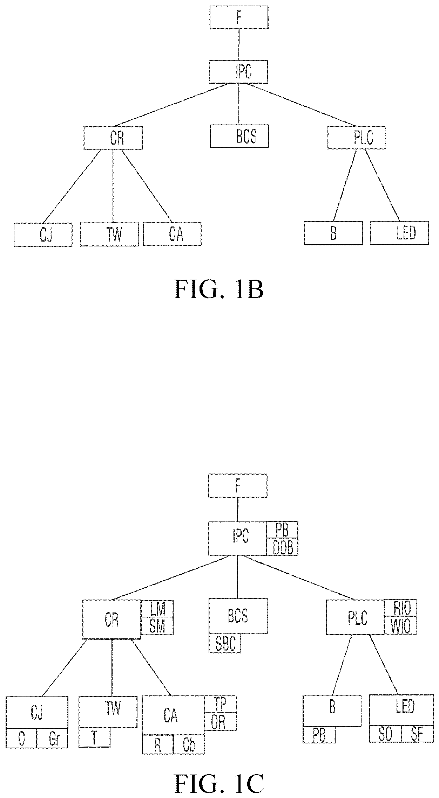

In specific implementation, a resource as an operation execution body may be used as a common configuration parameter of the function block node, and configured for the required function block node correspondingly when creating the behavior tree. Alternatively, when the function block node is created, the resource as the operation execution body is configured for the function block node. In this way, there is no need to configure the resources for the required function block node when creating the behavior tree. Alternatively, in order to facilitate the management of the resources, these resources may be expressed in the form of resource nodes, and these resource nodes may be stored in the form of a resource knowledge graph. The resource knowledge graph includes: various resource nodes, and a connecting line representing the relationship between the resource nodes. For example, FIG. 1B shows an example diagram of a resource knowledge graph in one example. As shown in FIG. 1B, the resource knowledge graph is a factory resource knowledge graph, namely, describing a real system configuration of a factory. The factory (F) node has an industrial personal computer (IPC) node. The industrial personal computer (IPC) node has a cooperative robot (CR) node, a PLC node, and a bar code scanner (BCS) node. The cooperative robot (CR) node has a clamping jaw (CJ) node, a torque wrench (TW) node, and a camera (CA) node. The PLC node has a button (B) node and an LED alarm light node. In some applications, there may be indeed more than one device of a certain type, such as a cooperative robot, and such devices may be distinguished by a tag or model, and the like. Details are omitted herein.

Each function block node may be instantiated as an operation of a corresponding resource by associating a resource node. For example, a certain logical node may be instantiated as an operation of a corresponding device by associating a device resource node. In specific implementation, a resource header may be set for the function block node, and resources associated with the function block node will be displayed in the resource header.

The specific association process may be implemented in a number of different manners. For example, each resource node may be associated with a corresponding function block node in advance. In this way, when creating a behavior tree, the function block node associated with corresponding resources may be directly pulled without temporary configuration. For example, FIG. 1C shows an example diagram of function block nodes associated with resource nodes in one example. As shown in FIG. 1C, corresponding function block nodes are associated with the resources shown in the resource knowledge graph shown in FIG. 1B, respectively. The industrial personal computer (IPC) node is associated with a press button (PB) node and a display dialog box on screen (DDB) node. The cooperative robot (CR) node is associated with a linear move (LM) node and a shutdown mobile (SM) node. The PLC node is associated with a read I/O (RIO) node and a write I/O (WIO) node. The bar code scanner (BCS) node is associated with a scan bar code (SBC) node. The clamping jaw (CJ) node is associated with an open (O) node and a grab (Gr) node. The torque wrench (TW) node is associated with a twist (T) node. The camera (CA) node is associated with a register (R) node, a calibration (Cb) node, a take photo (TP) node, and an object recognition (OR) node. The button (B) node is associated with a PB node. The LED alarm light node is associated with a switch on (SO) node and a switch off (SF) node.

Alternatively, instead of associating resource nodes with function block nodes in advance, the corresponding resource nodes may be associated with the required function block nodes when creating the behavior tree.

Alternatively, a function block node (which may be referred to as a special-purpose function block node) associated with a resource node in advance and a function block node (which may be referred to as a general-purpose function block node) not associated with a resource node may also exist at the same time. Although the general-purpose function block node is not associated with site resources, the simulation of a workflow corresponding to a behavior tree including the function block node is not affected. For example, a CR may not have been purchased yet. In order to verify the implementability, the corresponding general-purpose function block node may be used for simulation in advance, and then the purchase may be started when it is determined that the purchase is implementable.

Furthermore, in this embodiment, the following decorator node may be further included:

### III. Decorator Node

The decorator node is mainly configured to decorate a function block node driven by a compositor node, and, for example, may be configured to determine whether a branch or even a single node in the behavior tree may be executed. The decorator node may include: some or all of a repeat (Rp) node, a retry (Rt) node, a one-shot (OS) node, a timeout (TO) node, a timer (Tm) node, an inverter (Iv) node, a force run (FR) node, a force OK (FO) node, a force failed (FF) node, and a guard (G) node. Some of the decorator nodes are briefly described below:
1) Inverter Node: The node may have a sub-node, and is configured to invert the sub-node. If the sub-node is failed, OK is returned. If the sub-node is OK, failure is returned.
2) Force OK Node: The node may have a sub-node (e.g., function block node), and will always return OK regardless of whether the sub-node thereof is OK or not.
3) Force Failed Node: The node may have a sub-node (e.g., function block node), and will always return failure regardless of whether the sub-node thereof is OK or not.
4) Repeat Node: The node may have a sub-node (e.g., function block node), and may repeatedly execute the sub-node thereof for a fixed number of times.
5) Retry Node: The node may have a sub-node (e.g., function block node), and may trigger the sub-node thereof for at most N times. If the sub-node thereof returns failure, the trigger is retried for at most N-1 times. When the number of retries is zero, OK is returned. If the sub-node returns OK, the cycle is interrupted, and OK is also returned. N is a positive integer.
6) One-Shot Node: The node may have a sub-node, indicating that the sub-node thereof is only executed once in the workflow and will not be executed again until the workflow is restarted.
7) Timeout Node: The node may have a sub-node and is configured to time the execution of the sub-node (e.g., function block node) thereof. When the execution time exceeds a specified time (even if the execution is not completed), the execution is exited.
8) Timer Node: The node may have a sub-node, and executes the sub-node (e.g., function block node) thereof after a specified time is reached.
9) Force Run Node: The node may have a sub-node, and will be forced to return to the running state regardless of whether the sub-node (e.g., function block node) thereof has been executed completely.
10) Guard Node: The node may have at least one sub-node, and is configured to guard the state of all the sub-nodes thereof. When any sub-node is executed erroneously, an error is reported. When all the sub-nodes are normal, normality is returned.

In other implementations, the decorator node may also be included within a flow control node. In other words, the flow control node may include: all or some of a main control node, a compositor node, and a decorator node.

In this embodiment, each behavior tree node may be listed on the graphical user interface in the form of icons, and the user may determine a node needed for creating the workflow by selecting and dragging the icons to be added to a canvas. Further, necessary parameter configurations, such as resource configuration and/or input and output parameter configuration, may also be performed on the node. If there is more than one operation to be executed by a workcell, namely, operation defined in a required workflow, a behavior tree corresponding to the workflow may include a plurality of function block nodes, and corresponding flow control nodes may be set according to the sequence and relationship of the operations, and the behavior tree corresponding to the workflow is finally generated by corresponding discharge connection to the dragged nodes. In other words, the behavior tree construction operation includes adding and connecting operations to behavior tree nodes. Further, operations of associating resources for the added function block nodes may also be included. Furthermore, the behavior tree construction operation may also include: configuration operations on input and output parameters of the behavior tree nodes.

Step S12: Generate, in response to the behavior tree construction operation, a behavior tree corresponding to a workflow, where a logical node in the behavior tree is instantiated as an operation of a corresponding device.

In this embodiment, in response to the behavior tree construction operation, the behavior tree nodes may be instantiated, and a connection relationship between the instantiated behavior tree nodes may be established. For example, by performing this step, the added logical node may be instantiated as an operation of a corresponding device. Then, based on the connection relationship between the instantiated behavior tree nodes, a behavior tree corresponding to a workflow is generated.

In specific implementation, the behavior tree nodes may be stored in a node library. Furthermore, for similar application scenarios, in order to avoid the waste of manpower, time, and the like in repeatedly constructing a behavior tree, it is preferable that a behavior tree (or a behavior tree framework that is not instantiated) of a corresponding workflow or a corresponding subworkflow that is debugged or successfully run has been constructed for the user and is stored as one workflow node or subworkflow node. Accordingly, a workflow (WF) node and a subworkflow (SWF) node may be further included in the node library. When the user needs to construct a similar behavior tree or construct a behavior tree including the workflow or subworkflow, the corresponding workflow node or subworkflow node may be selected and configured as necessary to obtain the behavior tree for implementing the required workflow.

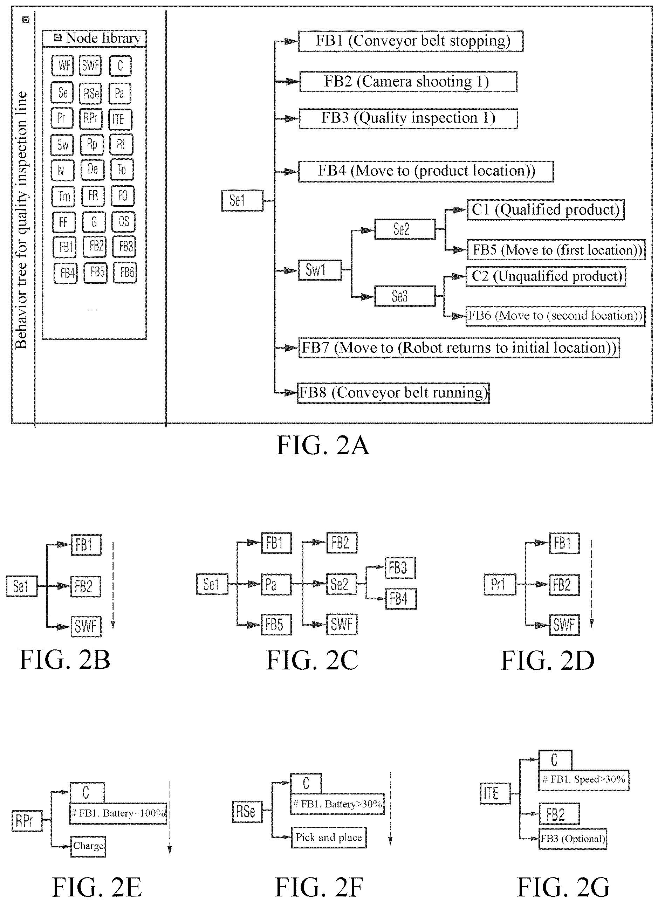

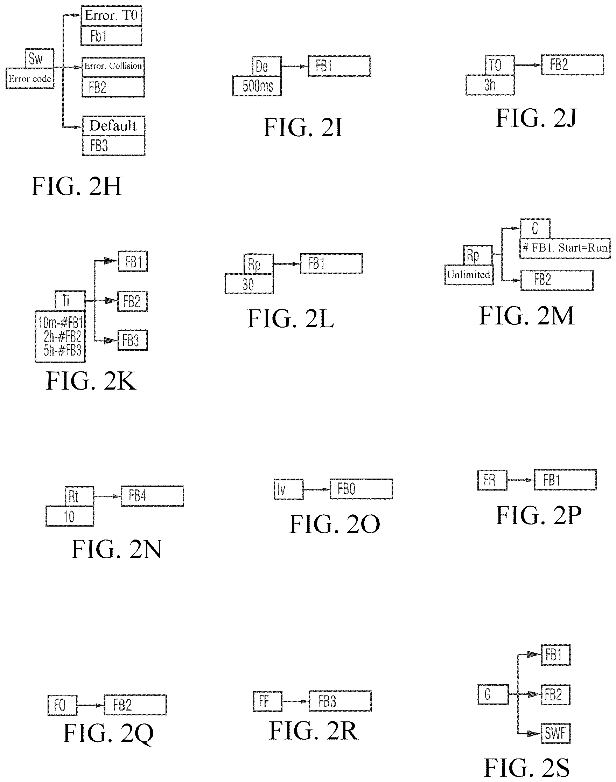

FIG. 2A shows a schematic diagram of constructing a behavior tree of a workcell in a quality inspection line in one example. FIG. 2B to FIG. 2S show schematic diagrams of some behavior trees constructed in one example, respectively.

Furthermore, in other implementations, this embodiment may further include step S13 below as shown by a dotted line in FIG. 1.

Step S13: Parse the behavior tree, and deploy the workflow corresponding to the behavior tree to a runtime of a corresponding workcell, such that resources in the workcell execute operations according to the workflow.

In specific implementation, the workcell may have a main controller. At this moment, the runtime may be located on the main controller of the workcell. Accordingly, device resources among the resources may be connected to the main controller, and the main controller controls the connected device resources to execute corresponding operations according to the workflow at the runtime. Manpower resources among the resources may directly execute corresponding operations according to prompts of the workflow at the runtime.

In this embodiment, the behavior tree may be stored in a Markup language, for example, an extensible markup language (XML) and may be verified by an XML Schema (XSD) prototype to verify that an XML format of the behavior tree is correct. After parsing the behavior tree, a workflow expressed in the form of "node link assembly" may be obtained, and the workflow may then be compiled and downloaded to the runtime of the main controller of the corresponding workcell.

Furthermore, according to a definition of Gartner, an OT domain generally refers to an operational technology (OT), which combines hardware and software to detect or trigger changes in processes or events occurring in an enterprise by directly monitoring and/or controlling a physical device (referred to as an OT device). The OT utilizes a computer to monitor or change a physical state such as an industrial control system (ICS). The industrial control system is configured to remotely monitor and/or control key industrial processes based on computer-implemented facilities, systems and devices to achieve physical functions. The term "OT" is used for distinguishing the industrial control system from a traditional information technology (IT) system in terms of technical implementation and function.

Currently, there are many IT low-code development tools or platforms on the market. Some tools are aimed at usage scenarios of the Internet of things and are aimed at experienced IT engineers, while OT engineers and junior IT engineers have difficulty understanding the paradigms thereof. Some tools are more suitable for usage scenarios of IT domain low-code development, but are not well suitable for the OT domain.

The workflow creation method in this embodiment may be used for this OT domain as an OT domain low-code development method. Specifically, the workflow creation method shown in FIG. 1A may be implemented in the OT domain, such as an OT domain low-code development platform. Accordingly, the workflow may be an OT domain workflow. The workcell may be a workcell within the OT domain. The device may be an OT device. Here, the OT device may include, but is not limited to: an Internet of things (IoT) device, a programmable logic controller (PLC), robotics, a manual process, an industrial personal computer (IPC), and the like.

Furthermore, in the embodiments of the present application, it is considered that the current integration of the IT domain and the OT domain has become increasingly important in the process of digital transformation of enterprises. In order to integrate the IT domain and the OT domain into an ITOT system, an urgent problem to be solved currently is how to collect OT domain data and control an OT domain process in an easy-to-understand manner instead of IT domain programming.

The workflow creation method in this embodiment may be used for this ITOT system as an OT domain low-code development method that may be integrated with the IT domain. Similarly, the workflow creation method shown in FIG. 1A may be implemented in the OT domain, such as an OT domain low-code development platform. Accordingly, the workflow may be an OT domain workflow. The workcell may be a workcell within the OT domain.

Furthermore, in order to realize the integration of the IT domain and the OT domain, on the basis of the workflow creation method shown in FIG. 1A, the method may further include: generating a micro-service based on the behavior tree, such that an IT device triggers the runtime of the main controller of the workcell to execute the OT domain workflow by calling the micro-service. In specific implementation, the IT device may directly call the micro-service or call the micro-service through a knowledge middleware.

When a micro-service is generated based on the behavior tree, an APE of the micro-service may be generated based on the behavior tree, where the processing process in the API includes various operations in the OT domain workflow. An input parameter of the API is a parameter acquired by an input port of the OT domain workflow, and an output parameter of the API is a parameter outputted by an output port of the OT domain workflow.

In order for the IT domain to call the micro-service, the IT domain is required to acquire information of the micro-service. Specific implementations include, but are not limited to, the following two manners:
Manner 1:
   In Manner 1, a code developer of the OT domain may notify a code developer of the IT domain of names and IP addresses of generated micro-services. In this way, the code developer of the IT domain may directly write the information of each micro-service into code during the development process, such that the IT device can call the micro-services. Manner 1 is more suitable for scenarios with a small number of micro-services.
Manner 2:
   In Manner 2, registration and discovery mechanisms may be adopted. In other words, each micro-service is registered in the knowledge middleware, such that an IT domain code development tool enables the IT device to discover the connected micro-service through the knowledge middleware. In specific implementation, an IT domain code development tool may be used for enabling, by code development, the IT domain device to discover the connected micro-service through the knowledge middleware. An apparatus that completes the micro-service registration may be an OT domain micro-service generator or a third-party apparatus. The third-party apparatus may be regarded as part of the OT domain low-code development platform, or implemented in the knowledge middleware. Manner 2 is more suitable for scenarios with a large number of micro-services.

In this embodiment, the IT device may include, but is not limited to: a manufacturing operation management (MOM) system, a manufacturing execution system (MES), an enterprise resource planning (ERP) system, an enterprise service bus (ERP), a product lifecycle management (PLM) system, and the like.

In this embodiment, since the IT domain code development tool may be programmed to realize that the IT device calls the micro-service through the knowledge middleware to trigger the runtime of the main controller of the workcell to execute the OT domain workflow, the code development platform of the IT domain can control the OT domain process. In other words, the integration of the IT domain and the OT domain is realized. Here, the micro-service is automatically generated by the OT domain micro-service generator based on an OT domain behavior tree. There is no need for the IT domain code development tool to understand the details of the OT domain workflow, and only the identifier (e.g., name) and IP address of the micro-service are required to be acquired. An IT domain developer does not need to understand the OT domain device and the control process, which are easy to implement and understand.

The applicable fields of the embodiments of the present application include, but are not limited to: industrial automation, logistics, laboratory, maritime, smart grid, electric vehicle infrastructure, electric vehicle, building automation, smart city, water treatment, garbage recycling and smart farm, and the like.

The workflow creation method in the embodiments of the present application has been described above in detail, and a workflow creation system in the embodiments of the present application will be described in detail below. The workflow creation system in the embodiments of the present application may be configured to implement the workflow creation method in the embodiments of the present application. Details not disclosed in detail in the system embodiments of the present invention may be found in the corresponding description in the method embodiments of the present disclosure. The details are omitted herein.

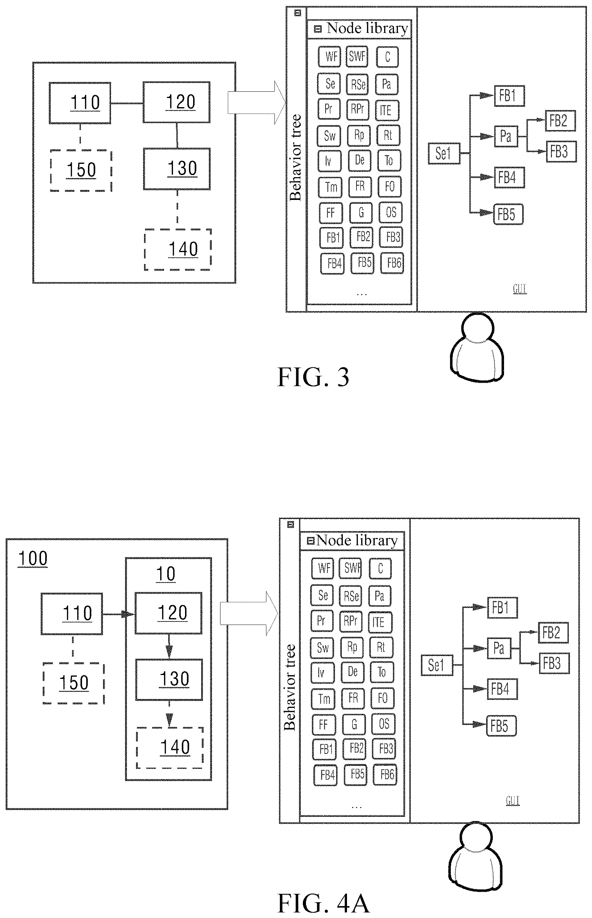

FIG. 3 shows a structural schematic diagram of a workflow creation system according to an embodiment of the present application. As shown in FIG. 3, the system may include: a node library 110, a graphical interface module 120, and an edit processing module 130.

A behavior tree node for constructing a behavior tree is arranged in the node library 110. The behavior tree nodes may include: a flow control node and a function block node. A behavior tree is configured to characterize a workflow. The workflow is configured to define operations to be executed by a workcell. The flow control node is configured to implement the logical control in the workflow. The function block node is configured to implement a service operation in the workflow. The function block node may include: logical nodes. Each logical node corresponds to an operation template, and each operation template predefines operations that can be executed by at least one type of resources. The operations include: actions, methods, or skills.

In one implementation, the resources are expressed in the form of resource nodes, and all resource nodes are associatively stored in the form of a resource knowledge graph. The resource knowledge graph includes: various resource nodes, and a connecting line representing the relationship between the resource nodes. Accordingly, in this embodiment, the resource knowledge graph may further include: a resource library 150, configured to store various resources in the form of a resource knowledge graph. Each resource can execute at least one service operation.

In one implementation, the flow control node may include: some or all of a main control node, a logical control node, and a condition node. The main control node may include: some or all of a start node, an end node, a goto node, an anchor node, a stop node, and an abort node. The logical control node includes: some or all of a sequence node, a reactive sequence node, a parallel node, an in-process quality control node, a priority node, a reactive priority node, an if-then-else node, and a switch node.

In one implementation, the function block node may further include: some or all of a manual node, a dynamic node, a delay node, and an empty node.

In one implementation, the behavior tree node further includes: a decorator node, which may include: some or all of a repeat node, a retry node, a one-shot node, a timeout node, a timer node, an inverter node, a force run node, a force OK node, a force failed node, and a guard node.

In one implementation, some or all of the function block nodes in the node library 110 are bound with resources for executing service operations corresponding to the function block nodes, respectively.

The graphical interface module 120 is configured to provide a graphical user interface (GUI) for a user to construct a behavior tree based on the behavior tree node in the node library.

Each behavior tree node may be listed in the form of an icon on the graphical user interface (GUI).

The edit processing module 130 is configured to generate, in response to the behavior tree construction operation, a behavior tree corresponding to a workflow, where a logical node in the behavior tree is instantiated as an operation of a corresponding resource such as a device. In specific implementation, the edit processing module 130 may instantiate the behavior tree nodes in response to the behavior tree construction operation, and establish a connection relationship between the instantiated behavior tree nodes. Based on the connection relationship between the instantiated behavior tree nodes, a behavior tree corresponding to a workflow is generated. Some or all of the instantiated function block nodes are associated with resources for executing corresponding service operations. For example, through the operation, the logical node is instantiated as an operation of a corresponding device such as a device.

In this embodiment, each behavior tree node may be listed on the graphical user interface in the form of icons, and the user may determine a node needed for creating the workflow by selecting and dragging the icons to a canvas. Further, necessary parameter configurations, such as resource configuration and/or input and output parameter configuration, may also be performed on the node. If there is more than one operation to be executed by a workcell, namely, operation defined in a required workflow, a behavior tree corresponding to the workflow may include a plurality of logical nodes, and corresponding flow control nodes may be set according to the sequence and relationship of the operations, and the behavior tree corresponding to the workflow is finally generated by corresponding discharge connection to the dragged nodes.

In one implementation, the construction operation may include: an operation of adding a function block node and an operation of associating resources for the added function block node.

Corresponding to the method shown in FIG. 1A, the workflow creation system in this embodiment may further include: a parsing deployment module 140, configured to parse the behavior tree, and deploy the workflow corresponding to the behavior tree to a runtime of a main controller of a corresponding workcell, such that resources in the workcell connected to the main controller execute operations according to the workflow.

FIG. 4A shows an OT domain low-code development platform 100 according to an embodiment of the present application. The platform 100 may be configured to implement the workflow creation system shown in FIG. 3.

As described above, there is currently no low-code development tool and platform suitable for an OT domain. In the platform 100 shown in FIG. 4A, since operation templates (which may be regarded as providing capabilities of the OT domain) in which various types of OT devices can execute operations are defined in advance, corresponding logical nodes are constructed based on the operation templates, and other behavior tree nodes for constructing an OT domain workflow are set at the same time, a behavior tree corresponding to the OT domain workflow may be conveniently and quickly created, and low-code development suitable for the OT domain is realized. Development engineers do not need to have an in-depth understanding of various types of OT devices to realize OT domain development.

Specifically, as shown in FIG. 4A, the OT domain low-code development platform 100 may include:
an OT domain low-code development tool 10. The OT domain low-code development tool 10 may be configured to implement the graphical interface module 120 and the edit processing module 130 in the workflow creation system shown in FIG. 3. Further, the parsing deployment module 140 in the workflow creation system shown in FIG. 3 may also be implemented. The node library 110 in the workflow creation system shown in FIG. 3 may be stored on a memory.

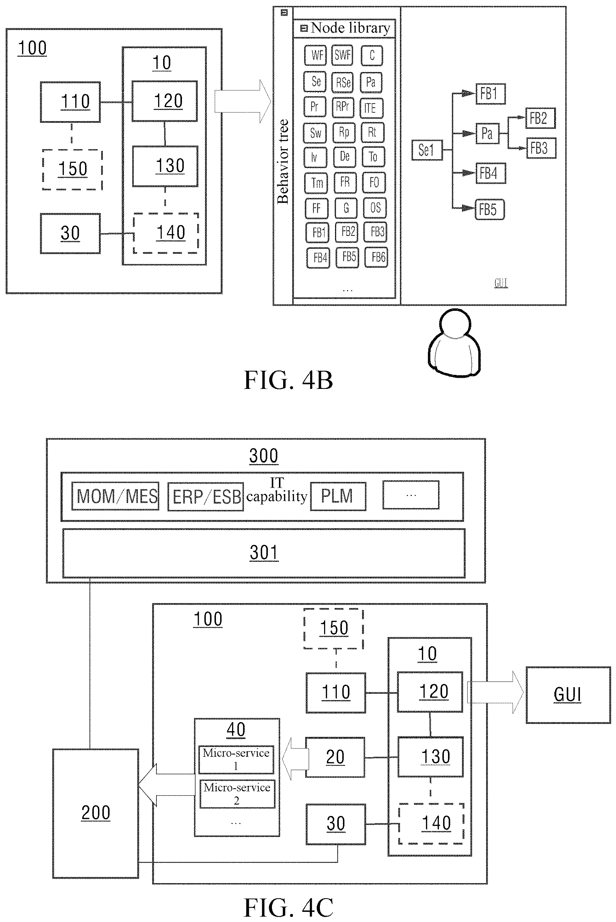

Further, as shown in FIG. 4B, the OT domain low-code development platform 100 may further include a runtime 30 of the main controller of the workcell. The OT domain low-code development tool 10 may deploy the generated OT domain workflow corresponding to the behavior tree to the runtime 30 of the main controller of the workcell, such that OT devices in the workcell connected to the main controller execute operations according to the OT domain workflow.

The composition of the OT domain low-code development platform 100 shown in FIGS. 4A and 4B relates only to the OT domain. However, the integration of the IT domain and the OT domain has become increasingly important for enterprise digital transformation. What needs to be implemented is how enterprises control processes in the OT domain in an easy-to-understand and non-IT-programming manner. The OT domain low-code development platform 100 shown in FIG. 4C solves the problem how to control the processes in the OT domain through an IT domain code development platform 300. As shown in FIG. 4C, on the basis of the structure shown in FIG. 4B, the OT domain low-code development platform 100 may further include an OT domain micro-service generator 20, which may generate a micro-service 40 based on an OT domain behavior tree. In this way, the IT domain code development tool 301 may be programmed to realize that the IT device calls the micro-service 40 through a knowledge middleware 200 to trigger the runtime 30 of the main controller of the workcell to execute the OT domain workflow. Thus, the IT domain code development platform 300 can control the processes in the OT domain. In other words, the integration of the IT domain and the OT domain is realized. Here, the micro-service 40 is automatically generated by the OT domain micro-service generator 20 based on an OT domain behavior tree. There is no need for the IT domain code development tool 301 to understand the details of the OT domain workflow, and only the identifier (e.g., name) and IP address of the micro-service 40 are required to be acquired. An IT domain developer does not need to understand the OT domain device and the control process, which are easy to implement and understand.

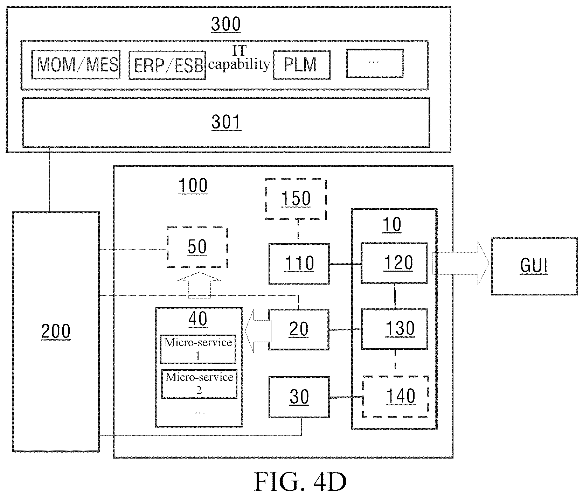

In order for the IT domain to call the micro-service 40, the IT domain is required to acquire information of the micro-service 40. Corresponding to the method shown in FIG. 1A, implementations include, but are not limited to, the following two manners:
Manner 1:
   In Manner 1, a code developer of the OT domain may notify a code developer of the IT domain of names and IP addresses of the generated micro-services 40. In this way, the code developer of the IT domain may directly write the information of each micro-service 40 into code during the development process, such that the IT device can call the micro-services 40. Manner 1 is more suitable for scenarios with a small number of micro-services.
Manner 2:
   In Manner 2, registration and discovery mechanisms may be adopted. Each micro-service 40 may be registered in the knowledge middleware 200. In this way, the IT domain code development tool 301 enables, by code development, the IT domain device to discover the connected micro-service 40 through the knowledge middleware 200. An apparatus that completes the registration of the micro-service 40 may be the OT domain micro-service generator 20 or a third-party apparatus 50 shown in FIG. 4D. The third-party apparatus 50 may be regarded as part of the OT domain low-code development platform 100, or implemented in the knowledge middleware 200. Manner 2 is more suitable for scenarios with a large number of micro-services. By registering the micro-service in the knowledge middleware, the IT device can call the micro-service more effectively, and the integration of the OT domain and the IT domain is strengthened.

Optionally, the OT domain micro-service generator 20 may generate an API of the micro-service 40 based on the OT domain behavior tree, where the processing process in the API may include operations of function blocks in the OT domain workflow. An input parameter of the API is a parameter acquired by an input port of the OT domain workflow, and an output parameter of the API is a parameter outputted by an output port of the OT domain workflow.

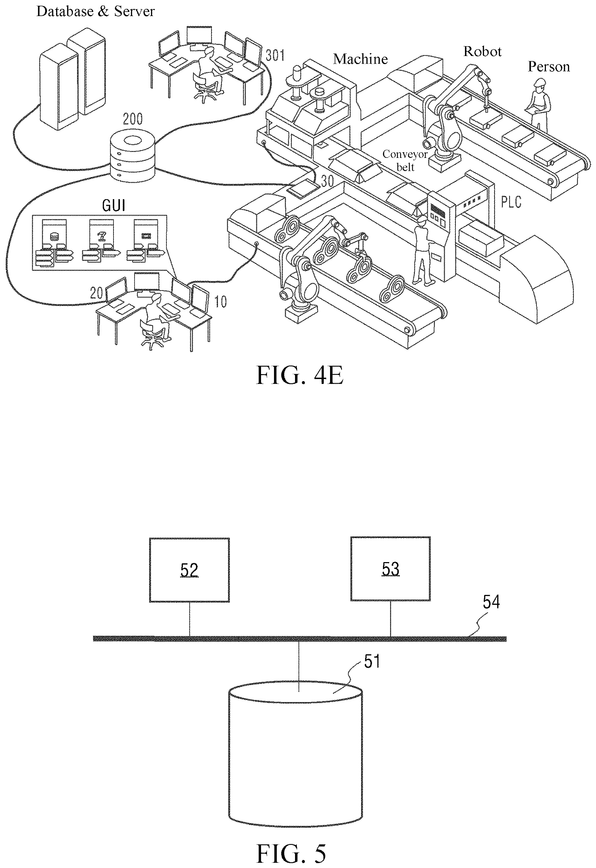

An application scenario of the OT domain low-code development platform 100 according to the embodiments of the present application in the field of industrial automation is as shown in FIG. 4E. The low-code development tool 10 generates a behavior tree corresponding to an OT domain workflow under the operation of the user. The OT domain workflow defines operations to be executed by a production line as one workcell shown on the right side of FIG. 4E. A corresponding workflow is generated based on the behavior tree and published to the runtime 30, such that the runtime 30 can control the completion of the production line operations of the workcell. Also, a corresponding micro-service may be generated by the micro-service generator 20 based on the behavior tree and registered in the knowledge middleware 200. In this way, the IT domain code development tool 301 may call the corresponding micro-service through the knowledge middleware 200. As shown in the GUI in the lower left corner of FIG. 4E, the user may edit the OT domain behavior tree by dragging and editing all the nodes including the function block node. For example, the knowledge middleware 200 first acquires required data (e.g., workpiece processing parameter) from a database & server, so as to control the running of the entire workcell. The workcell here is a production line, which includes a machine, a conveyor belt, a robot arm, a person, PLC, AGB, and the like. In specific implementation, the IT domain code development tool 301 and the low-code development tool 10 may be located on the same hardware device, for example, on the same computer.

FIG. 5 shows another structural schematic diagram of a workflow creation system according to an embodiment of the present application. As shown in FIG. 5, the system may be configured to implement the method shown in FIG. 1A, or to implement the workflow creation system shown in FIG. 3, or to implement the workflow creation system described in any one of FIGS. 4A to 4D, namely, the OT domain low-code development platform 100. The OT domain low-code development tool 10, the OT domain micro-service generator 20, the runtime 30, and the third-party apparatus 60 may be implemented as individual hardware devices, for example, servers, workstations, single-chip microcomputers, or processing chips. Alternatively, these apparatuses are implemented on the same hardware device and stored as a software program in at least one memory, and the software program is called by at least one processor to implement the foregoing OT domain low-code development method. The node library 110 and the generated micro-services 40 may be stored in the at least one memory.

As shown in FIG. 5, the system may include: at least one memory 51, at least one processor 52, and at least one display 53. Furthermore, the system may further include some other components, for example, a communication port (not shown in FIG. 5) and the like. These components communicate via a bus 54.

The at least one memory 51 is configured to store a computer program. The at least one memory 51 may include a computer-readable medium, such as a random access memory (RAM). Furthermore, the at least one memory 51 may store an operating system and the like. The operating system includes, but is not limited to: Android operating system, Symbian operating system, Windows operating system, Linux operating system, and the like. The computer storage program may include the following program modules: the node library 110, the graphical interface module 120, the edit processing module 130, and the parsing deployment module 140. Optionally, the OT domain micro-service generator 20, the runtime 30, and the third-party apparatus 50 may be further included.

The at least one processor 52 is configured to call a computer program stored in the at least one memory 51 to perform the workflow creation method in the embodiments of the present application. The at least one processor 52 may be a microprocessor, an application specific integrated circuit (ASIC), a digital signal processor (DSP), a central processing unit (CPU), a graphics processing unit (GPU), a state machine, or the like. The at least one processor may receive and send data through the communication port.

The at least one display 53 is configured to display an image user interface.

Specifically, the at least one processor 52 is configured to call the computer program stored in the at least one memory 51 to cause the system to execute the operations in the workflow creation method in any of the implementations. Furthermore, the communication interface is configured to implement communication with other devices, such as communication with the knowledge middleware 200.

In the embodiments of the present application, the OT domain low-code development tool 10 for implementing the graphical interface module 120, the edit processing module 130, and the parsing deployment module 140 may be a lightweight web-based application, and may be implemented on an industrial site (e.g., an edge device or a local server), or may be implemented on a cloud (such as a public cloud of AWS or a private cloud of OpenStack). A visual engineering paradigm originates from a function block typed diagram (FBTD). The OT domain micro-service generator 20 may use modern translation programming languages to generate a standard API such as RESTful or RPC. The runtime 30 may simply implement the OT domain workflow and provide openness based on an ecosystem of an open source community (e.g., Python). The runtime 30 may be deployed on an embedded IoT device such as a single board computer (SBC).

It should be mentioned that the embodiments of the present application may include an apparatus having an architecture different from that shown in FIG. 5. The architecture is merely an example, and is configured to explain the workflow construction method according to the embodiments of the present application.

Furthermore, an embodiment of the present application also provides an IT domain OT domain integration system, namely, an ITOT system, which may include an IT device and a workflow creation system in any of the implementations of the present application. Furthermore, the ITOT system may further include: the IT domain code development platform 300 as shown in FIGS. 4C and 4D.

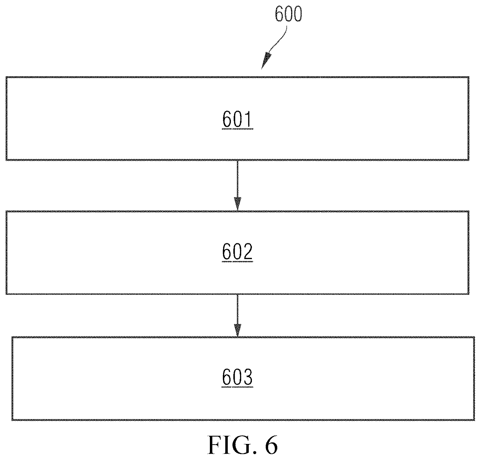

Implementations of the present disclosure also provide a technical solution of using a compositor node of a low-code paradigm having function block typed diagram (FBTD) logic to control a workflow. FIG. 6 is an exemplary flowchart of a workflow control method according to various embodiments of the present application.

As shown in FIG. 6, the method 600 includes:
Step 601: Determine a type of a compositor node based on an operation performed by a user on a graphical user interface, where the compositor node includes a start block adapted to starting executing the compositor node, an end block adapted to ending executing the compositor node, and a plurality of worklinks arranged between the start block and the end block.
Step 602: Determine a destination worklink from the plurality of worklinks based on the type of the compositor node.
Step 603: Control logic of a workflow based on the destination worklink, where the workflow is generated based on a behavior tree including the compositor node.

The compositor node always occurs in pairs with the start block and the end block. The start block has an optional input port to provide a compositor expression, such that a destination worklink may be selected based on the compositor expression. For example, the destination worklink is selected according to a value of the compositor expression, or the destination worklink is selected based on a worklink selection rule defined by the compositor expression. The end block has an optional input port referred to as an end logical value, and a parallel type compositor node determines whether it is a logical AND or a logical OR using the end logical value. A set of compositor pair blocks may include two or more worklinks (i.e., branches). Optionally, a data value block (DVB) is added ahead of each worklink in the compositor pair blocks, representing a trigger value of the compositor expression of the corresponding worklink. In one implementation, the data value block may be a value generated by the corresponding worklink based on the compositor expression for selecting the corresponding worklink. In another implementation, the data value block may also be a condition for selecting the corresponding worklink, where the condition is associated with the value generated based on the compositor expression.

In one implementation, at least one of the plurality of worklinks includes a function block node. The function block node is configured to implement a service operation in the workflow.

In one implementation, the determining a type of a compositor node based on an operation performed by a user on a graphical user interface includes: determining the type of the compositor node based on a selection operation performed by the user on the graphical user interface including a node library, where the node library includes: a compositor node that identifies the type semantically or a compositor node that identifies the type in a presentation style.

In the compositor node that identifies the type semantically, the type of the compositor node is directly identified in a textual manner in a visual icon of the compositor node.

In the compositor node that identifies the type in a presentation style, the type of the compositor node is identified accordingly by different presentation styles. For example, in an icon of the compositor node, the type of the compositor node is identified accordingly by different line types (e.g., solid lines, dotted lines, spaced lines, etc.) constituting the icon.

In one implementation, the method further includes: receiving a behavior tree construction operation performed by the user on the graphical user interface, where the construction operation includes adding and connecting operations to a behavior tree node including the compositor node and the function block node, the behavior tree is configured to characterize the workflow that is configured to define operations to be executed by a workcell, the function block node includes: logical nodes each corresponding to an operation template, each operation template predefines operations that can be executed by at least one type of devices, and the operations include: actions, methods, or skills; generating, in response to the behavior tree construction operation, the behavior tree corresponding to the workflow, where the logical node in the behavior tree is instantiated as an operation of a corresponding device; parsing the behavior tree to acquire the workflow; and deploying the workflow to a runtime of a corresponding workcell, such that devices in the workcell execute operations according to the workflow, where the workflow is an OT domain workflow, and the device is an OT device.

In one implementation, the method further includes: generating a micro-service based on the behavior tree, such that an IT device triggers the runtime of the main controller of the workcell to execute the OT domain workflow by calling the micro-service.

Flexible control of workflows implemented using different types of compositor nodes is illustrated below.

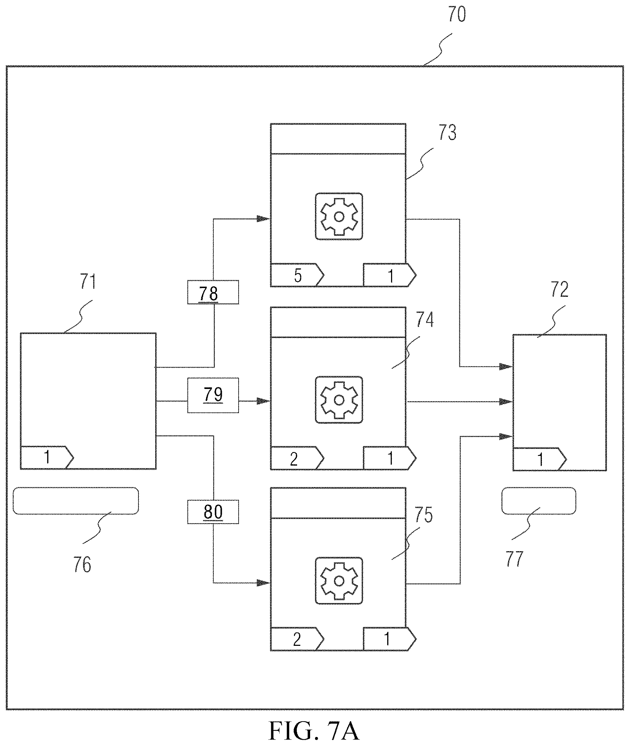

FIG. 7A is a first schematic diagram of a low-code paradigm of an FBTD logical compositor according to various embodiments of the present application. In FIG. 7A, the compositor node 70 includes a start block 71, an end block 72, and three worklinks arranged between the start block 71 and the end block 72. The first worklink includes execution of a function block node 73, the second worklink includes execution of a function block node 74, and the third worklink includes execution of a function block node 75. The start block 71 may include an input end for providing a composition expression 76. The end block 72 may include an input end for providing an end logical value 77. The function block node 73, the function block node 74, and the function block node 75 have respective data block values. A data value block 78 of the function block node 73, a data value block 79 of the function block node 74, and a data value block 80 of the function block node 75 may be arranged ahead of the respective corresponding function block nodes.

Depending on different types of compositor nodes 70, different manners of determining a destination worklink from the plurality of worklinks may be implemented, thus implementing flexible control over the workflow.

In one implementation, the type of the compositor node 70 is parallel (Pa). The determining a destination worklink from the plurality of worklinks includes: determining each of the plurality of worklinks as the destination worklink, and starting executing the destination worklink. The method further includes: receiving an end logical value via the input end of the end block, where when the end logical value is logical AND, the execution of the compositor node is ended via the end block after the execution of the plurality of worklinks is completed, and when the end logical value is logical OR, the execution of the compositor node is ended via the end block after the execution of at least one of the plurality of worklinks is completed.

Specifically, in FIG. 7A, when the type of the compositor node 70 is parallel, the composition expression 76 does not need to be provided for the compositor node 70. Accordingly, the composition data value blocks 78-80 do not need to be generated, and the end logical value 77 needs to be provided for the compositor node 70. At this moment, the first worklink, the second worklink, and the third worklink are all determined as the destination worklinks. Furthermore, the first worklink, the second worklink, and the third worklink are executed separately (in other words, the function block node 73, the function block node 74, and the function block node 75 are executed synchronously). Based on the value of the end logical value 77, time to stop executing the compositor node 70 is determined. When the value of the provided end logical value 77 is logical AND, the execution of the compositor node 70 is ended via the end block 72 after the execution of the first worklink, the second worklink, and the third worklink is completed. When the value of the end logical value 77 is logical OR, the execution of the compositor node 70 is ended via the end block 72 after the execution of at least one of the first worklink, the second worklink, and the third worklink is completed.

In one implementation, the type of the compositor node is switch (SW). The method further includes: receiving a preset composition expression via the input end of the start block. The determining a destination worklink from the plurality of worklinks includes: determining a data value block when each worklink is selected; and selecting a destination worklink conforming to the corresponding data value block from the plurality of worklinks based on a calculation result of the composition expression.

Specifically, in FIG. 7A, when the type of the compositor node 70 is switch, the composition expression 76 needs to be provided. Accordingly, the composition data value blocks 78-80 need to be generated based on the composition expression 76 or provided manually. However, the end logical value 77 does not need to be provided. For example, it is assumed that the data value block is a condition for selecting the corresponding worklink, where the data value block 78 is: "temperature is greater than 30 degrees Celsius and less than 50 degrees Celsius", the data value block 79 is: "temperature is greater than 50 degrees Celsius", and the data value block 80 is: "temperature is less than 30 degrees Celsius". Then, based on a specific temperature generated by the composition expression, specific branches corresponding to the data value blocks may be selected. For example, when the generated temperature is 20 degrees Celsius, the third worklink corresponding to the data value block 80 is selected.

In one implementation, the type of the compositor node is if-then-else (ITE). The method further includes: receiving a preset composition expression via the input end of the start block, where a result of the composition expression contains a logical true value or a logical false value. The determining a destination worklink from the plurality of worklinks includes: determining a corresponding destination worklink from the plurality of worklinks based on the result of the composition expression being the logical true value or the logical false value.

Here, based on whether the logical value generated by the composition expression is true or false, a preset worklink corresponding to the logical value is selected.

Specifically, in FIG. 7A, when the type of the compositor node 70 is ITE, the composition expression 76 capable of generating a logical value (true or false) needs to be provided. It is assumed that the first worklink corresponds to true and the second worklink corresponds to false. Then, when the value of the composition expression 76 is true, the first worklink serving as the destination worklink is selected and executed. When the value of the composition expression 76 is false, the second worklink serving as the destination worklink is selected and executed. In one implementation, the type of the compositor node is priority (fallback) (Pr). The method further includes: receiving a preset composition expression via the input end of the start block. The determining a destination worklink from the plurality of worklinks includes: calculating a data value block of each worklink based on the composition expression; determining a priority sequence of the plurality of worklinks based on a sorting result of the data value block of each worklink; and determining the destination worklink from the plurality of worklinks based on the priority sequence. The data value block may be a value generated by the corresponding worklink based on the composition expression for selecting the corresponding worklink. In other words, the data value block 78, the data value block 79, and the data value block 80 generated based on the composition expression may not be the same (for example, parameters of the execution links are different). At this moment, the priority sequence of the plurality of worklinks is determined based on the sorting result of the data value block of each worklink. The destination worklink is determined from the plurality of worklinks based on the priority sequence, where the sorting result of the data value blocks may be sorting in descending order or sorting in ascending order and the like, based on presetting. For example, in FIG. 7A, when the type of the compositor node 70 is priority, the composition expression 76 needs to be provided. It is assumed that the data value block of the first link generated based on the composition expression 76 is 15. It is assumed that the data value block 78 of the first link generated based on the composition expression 76 is 18, the data value block 79 of the second link generated based on the composition expression 76 is 20, and the data value block 80 of the third link generated based on the composition expression 76 is 25. The priority sequence of the worklinks is determined according to a size sequence of the data value blocks. It can be seen that the third link has the maximum priority (because the data value block 80 of the third link is maximal among the data value blocks), such that the third link is determined as the destination worklink, and the third link serving as the destination worklink is executed.

In one implementation, the type of the compositor node is reactive priority (fallback) (RPr). The method further includes: receiving a first composition expression and a second composition expression via the input end of the start block. The determining a destination worklink from the plurality of worklinks includes: calculating a first data value block of each worklink based on the first composition expression; calculating a second data value block of each worklink based on the second composition expression; determining a priority sequence of the plurality of worklinks based on a sorting result of the first data value blocks of the plurality of worklinks; and determining the destination worklink from the plurality of worklinks based on the priority sequence and the second data value block of each worklink.

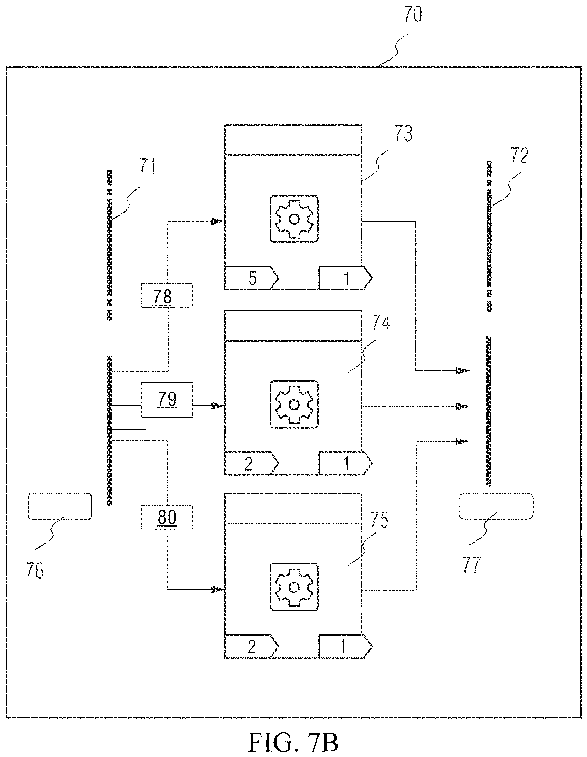

In FIG. 7A, the type of the compositor node may be directly identified in a textual manner in a visual icon of the compositor node (for example, the type is identified in a textual manner in boxes of the start block 71 and the end block 72). FIG. 7B is a second schematic diagram of a low-code paradigm of an FBTD logical compositor according to various embodiments of the present application. In FIG. 7B, the start block 71 and the end block 72 are simply identified by spacing lines having a specific shape, such that the type of the compositor node may be visually identified and presentation resources of the canvas can be saved.

The compositor node is easy to understand, but only suitable for a limited number of branches. Therefore, implementations of the present disclosure also introduce a new compositor node paradigm, which may support a large number of branches. Folding compositors have similar functions to common compositors, but support folding.

In one implementation, the compositor node is displayed in a folding manner in a folding box on the graphical user interface, where the folding box includes a first display area. The first display area is adapted to displaying a current display worklink of the compositor node and hiding worklinks other than the current display worklink. In one implementation, the folding box further includes a second display area, a third display area, and a switching control. The second display area is adapted to displaying a data value block of the current display worklink. The third display area is adapted to displaying a tag of the current display worklink. The switching control is adapted to switching the current display worklink among the plurality of worklinks.

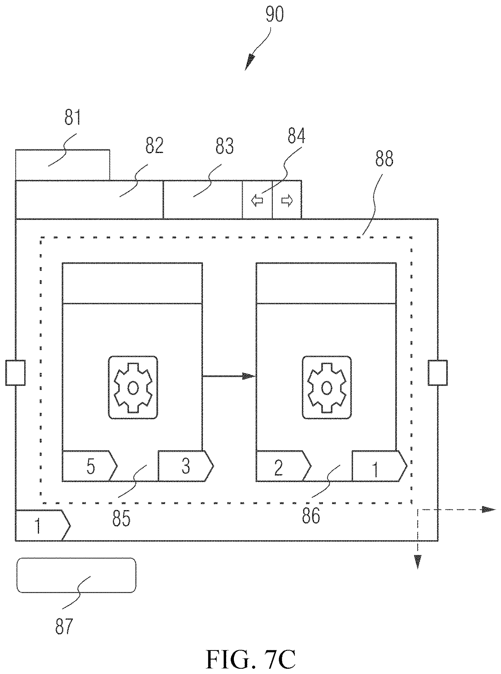

FIG. 7C is a schematic diagram of a low-code paradigm of an FBTD logical compositor having a folding form according to various embodiments of the present application.

In FIG. 7C, the folding box 90 includes a first display area 88, a second display area 83, and a third display area 81, where the first display area 88 displays a current display worklink. The current display worklink includes a function block node 85 and a function block node 86. The second display area 83 displays a data value block of the current display worklink. The third display area 81 displays a tag of the current display worklink. The folding box 90 further includes a switching control 84 (e.g., in the shape of an arrow) that switches the current display worklink among the plurality of worklinks. The first display area 88 is preferably stretchable and may be stretched based on a length of the current display worklink included therein. It can be seen that folding compositors are another type of low-code paradigm of FBTD compositors. The data value blocks for the result of the composition expression may be in a new column in a header row. Furthermore, left and right arrow buttons may be switched between different branches. The data value block of the current branch will be displayed in a data value block column. Also, a current tag of the current branch of the compositor will be displayed in a work order tag index block. The folding compositors may be stretched for varying numbers of function blocks, and such paradigm provides a convenient manner of displaying complex logic in a limited area of a low-code canvas.

Implementations of the present disclosure also provide an iterator node having an iteration function and a workflow generation method based on the iterator node. The method includes: first, receiving a behavior tree construction operation performed by a user on a graphical user interface, where the construction operation includes an addition operation for a behavior tree node, the behavior tree node includes a first iterator node, the first iterator node includes an input end adapted to receiving a first iterative item list, and a first worklink, and the first iterative item list includes a plurality of first iterative items and an execution sequence of each first iterative item; then, generating, in response to the behavior tree construction operation, a behavior tree including the first iterator node; and next, parsing the behavior tree to generate a workflow, where the workflow instructs each first iterative item to execute the first worklink based on the respective execution sequence in the first iterative item list.

It can be seen that based on providing the first iterator node with the iterative item list including the iterative items and the execution sequence of the iterative items, each iterative item may execute the first worklink in the first iterator node according to the respective execution sequence, thereby realizing a fast processing logic for batch execution of the worklinks.

In one implementation, the first worklink includes a function block node. The function block node is configured to implement a service operation in the workflow. In one implementation, the first worklink includes a second iterator node. The second iterator node includes an input end adapted to receiving a second iterative item list, and a second worklink. The second iterative item list includes a plurality of second iterative items and an execution sequence of each second iterative item. The workflow also instructs each second iterative item to execute the second worklink based on the respective execution sequence in the second iterative item list during an execution process of the first worklink. Therefore, by further arranging other second iterator nodes in the first worklink, a nested iterative processing mode may be implemented, thereby enriching the control logic.

In one implementation, the first worklink includes a compositor node. The compositor node includes a start block adapted to starting executing the compositor node, an end block adapted to ending executing the compositor node, and a plurality of worklinks arranged between the start block and the end block. The workflow also instructs to determine a destination worklink from the plurality of worklinks based on a type of the compositor node. It can be seen that by further arranging the compositor node in the first worklink, the control logic can be enriched. In one implementation, the method further includes: deploying the workflow onto a runtime of a workcell containing the plurality of first iterative items, such that the plurality of first iterative items in the workcell execute operations according to the workflow, where the workflow is an OT domain workflow, and the workcell is an OT device. It can be seen that implementations of the present disclosure can realize the control of an OT domain workflow.

In one implementation, the first iterator node is selected based on a selection operation performed by the user on the graphical user interface including a node library. Therefore, through a selection operation on a node library, iterator nodes may be conveniently provided for users. The first iterator node includes a first display area. The first display area is adapted to displaying a type of the first iterator node. The first iterator node further includes a second display area. The second display area is adapted to displaying a tag of the first iterative item, currently being executed, of the first worklink. It can be seen that by arranging display areas in iterator nodes, the types of the iterator nodes may be identified, and a tag of an iterative item that is currently being executed may be visualized.

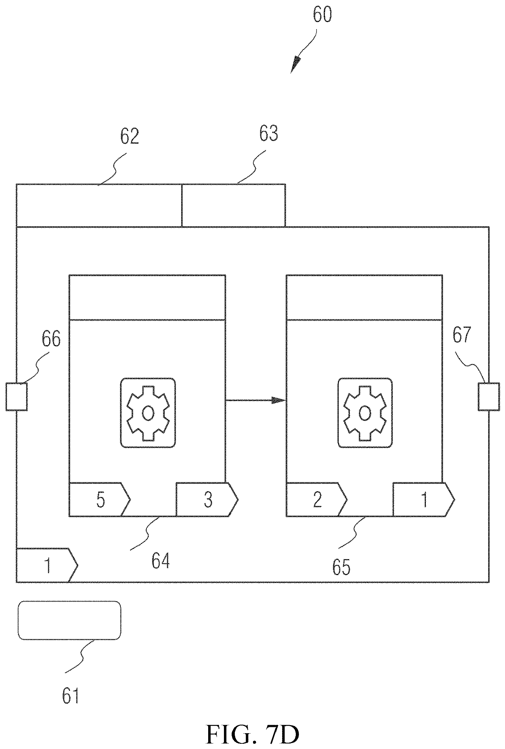

FIG. 7D is a schematic diagram of a low-code paradigm of an iterator according to an embodiment of the present application. In FIG. 7D, an iterator node 60 includes an input end adapted to receiving an iterative item list 61. The iterator node 60 further includes a first display area 62, a second display area 63, and a worklink. The worklink includes a function block node 64 and a function block node 65 connected sequentially. The iterative item list 61 includes a plurality of iterative items and an execution sequence of each iterative item. The iterator node 60 further includes a pin 66 adapted to being connected to a previous node in the workflow and a pin 67 adapted to being connected to a next node in the workflow. The previous node may be a compositor node, a decorator node, a function block node or another iterator, and the like. The next node may be a compositor node, a decorator node, a function block node or another iterator, and the like. Furthermore, the function block node 64 and the function block node 65 may be replaced by a compositor node, a decorator node, a function block node, or another iterator, respectively, based on specific control demands.

For example, the iterative item list 61 includes 100 robots and respective execution sequences. The iterative item list specifically includes: execution sequence 1: robot 1; execution sequence 2: robot 2; execution sequence 3: robot 3; execution sequence 4: robot 4; execution sequence 100: robot 100. The function block node 64 in the worklink is a camera shooting node, and the function block node 65 is an object recognition node. The generated workflow instructs: in a first iteration, robot 1 executes a function of the camera shooting node to realize camera shooting, and robot 1 then executes a function of object recognition to perform object recognition on a captured image; after the first iteration is executed, a second iteration is executed; in the second iteration, robot 2 executes the function of the camera shooting node to realize camera shooting, and robot 2 then executes the function of object recognition to perform object recognition on a captured image; after the second iteration is executed, a third iteration is executed; in the third iteration, robot 3 executes the function of the camera shooting node to realize camera shooting, and robot 3 then executes the function of object recognition to perform object recognition on a captured image; and so on, after a 99^{th} iteration is executed, a 100^{th} iteration is executed; in the 100th iteration, robot 100 executes the function of the camera shooting node to realize camera shooting, and robot 100 then executes the function of object recognition to perform object recognition on a captured image, thereby completing the control logic of the iterator node 60.

Implementations of the present disclosure also provide a decorator node serving as a behavior tree element. The decorator node is a basic element that decorates nodes (e.g., function blocks, etc.) in worklinks in efficient behavior tree logic. Based on the decorator node, a workflow generation method may also be implemented.

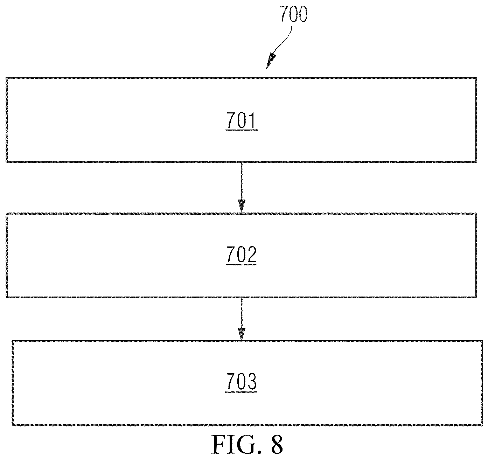

FIG. 8 is an exemplary flowchart of a workflow generation method according to an embodiment of the present application. As shown in FIG. 8, the method 700 includes:
Step 701: Receive a behavior tree construction operation performed by a user on a graphical user interface, where the construction operation includes an addition operation for a behavior tree node, the behavior tree node includes a first decorator node, and the first decorator node includes a first worklink and a first decorative layer adapted to decorating the first worklink.
Step 702: Generate, in response to the behavior tree construction operation, a behavior tree including the first decorator node.
Step 703: Parse the behavior tree to generate a workflow, where the workflow instructs the first worklink to work under the decoration of the first decorative layer.

Therefore, implementations of the present disclosure provide a workflow generation mode based on decorator nodes, so that the control logic of worklinks is enriched, and a workflow can be flexibly controlled.

In one exemplary implementation, the first decorative layer includes a first decorator expression, where the process of the first worklink working under the decoration of the first decorative layer includes at least one of the following: (1) An execution condition of the first worklink is determined based on the first decorator expression. For example, the first worklink may be executed when the first decorator expression is satisfied. (2) The number of executions of the first worklink is determined based on the first decorator expression. For example, the first decorator expression is used for generating an execution number value. (3) An execution time of the first worklink is determined based on the first decorator expression. For example, the first decorator expression is used for generating an execution time. (4) An execution state of the first worklink is determined based on the first decorator expression. For example, the first decorator expression is used for generating an execution state.

It can be seen that in implementations of the present disclosure, worklinks may be decorated in various forms by using decorator expressions, so that control functions of the worklinks are enriched.

In one exemplary implementation, the first worklink includes a function block node. The function block node is configured to implement a service operation in the workflow. It can be seen that in implementations of the present disclosure, function block nodes in worklinks may be decorated.

In one exemplary implementation, the first worklink includes a compositor node. The compositor node includes a start block adapted to starting executing the compositor node, an end block adapted to ending executing the compositor node, and a plurality of candidate worklinks arranged between the start block and the end block. The workflow also instructs to determine a destination worklink from the plurality of candidate worklinks based on a type of the compositor node. Therefore, in implementations of the present disclosure, compositor nodes in worklinks may be decorated.

In one exemplary implementation, the first worklink includes a second decorator node. The second decorator node includes a second worklink and a second decorative layer adapted to decorating the second worklink. The workflow instructs the second worklink to work under the decoration of the second decorative layer. It can be seen that implementations of the present disclosure also realize the nesting of decorators and enrich the control logic for worklinks.

In one exemplary implementation, the first worklink includes an iterator node. The iterator node includes an input end adapted to receiving an iterative item list, and an iterative worklink. The iterative item list includes a plurality of iterative items and an execution sequence of each iterative item. The workflow also instructs each iterative item to execute the iterative worklink based on the respective execution sequence in the iterative item list during an execution process of the first worklink.

In one exemplary implementation, the method 700 further includes: deploying the workflow onto a runtime containing a workcell, such that the workcell performs operations according to the workflow, where the workflow is an OT domain workflow and the workcell is an OT device.

In one exemplary implementation, the first decorator node is selected based on a selection operation performed by the user on the graphical user interface including a node library. The first decorator node includes a first display area and a second display area. The first display area is adapted to displaying a type of the first decorator node, and the second display area is adapted to displaying the first decorator expression.

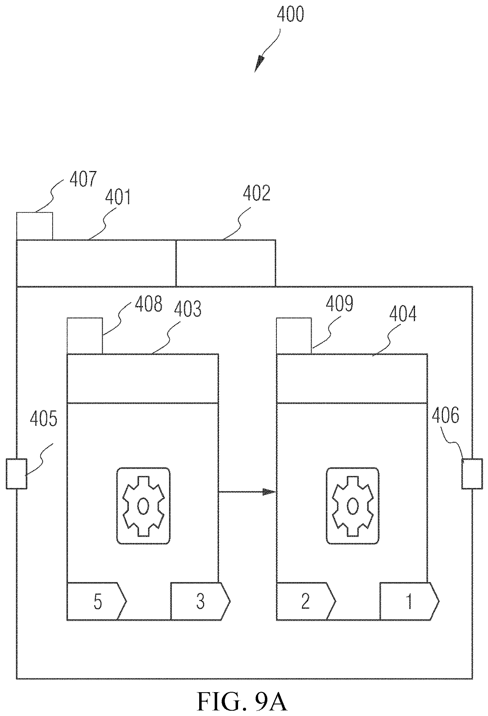

FIG. 9A is a first schematic diagram of a low-code paradigm of a decorator according to an embodiment of the present application. In FIG. 9A, a decorator node 400 includes a worklink composed of a function block 403 and a function block 404. The decorator node 400 further includes a decorative layer for decorating the worklink. The decorative layer may specifically be implemented as a decorator expression inputted by a user. By the decorator expression, an execution condition, a number of executions, an execution time or an execution state, and the like of the worklink composed of the function block 403 and the function block 404 may be constrained. The decorator expression may be implemented as utilizing predefined control parameters as a function, formula or fixed value of an independent variable. The decorator expression may be displayed in a second display area 402, such that the user can intuitively understand the decoration logic of the decorator node 400.

An arrow extending from an output side of the function block 403 points to the function block 404. An execution process of the worklink is specifically as follows: The function block 403 and the function block 404 are executed in sequence. The decorator node 400 further includes a pin 405 adapted to being connected to a previous node in the workflow and a pin 406 adapted to being connected to a next node in the workflow. The previous node may be a compositor node, another decorator node, a function block node or iterator, and the like. The next node may be a compositor node, another decorator node, a function block node or iterator, and the like. Furthermore, the function block 403 and the function block 404 may be replaced by a compositor node, a decorator node, a function block node, or an iterator, respectively, based on specific control demands.

The decorator node 400 may contain a variety of types depending on different decoration logic. For example, the decorator node 400 may be implemented as:
(1) Repeat (Rp) Node. At this moment, the decorator expression is configured to generate a number of repetitions of the worklink. For example, when a calculation value based on the decorator expression is 5, the worklink is repeated for 5 times.
(2) Retry (Rt) Node. At this moment, the decorator expression is configured to generate a maximum number of retries of the worklink. When the number of successful or failed executions of the worklink reaches the maximum number of retries, the retries are ended.
(3) One-Shot (OS) Node. At this moment, the decorator expression may be empty, forcibly making an appointment to execute the worklink only once.
(4) Timeout (TO) Node. At this moment, the decorator expression is configured to generate a timeout period. When the timeout period expires, the execution of the worklink is stopped.
(5) Timer (Tm) Node. At this moment, the decorator expression is configured to generate a timing period. When the timing period expires, the execution of the worklink is started.
(6) Inverter (Iv) Node. At this moment, the decorator expression may be empty, forcibly making an appointment to output an inverted value of an actual value of an execution state of an execution link. For example, when the execution link is OK, the inverter node reports execution failure. When the execution link is failed, the inverter node reports execution OK.
(7) Force Run (FR) Node. At this moment, the decorator expression may be empty, forcibly making an appointment to output the execution state (in running) of the execution link.
(8) Force OK (FO) Node. At this moment, the decorator expression may be empty, forcibly making an appointment to output the execution state (OK) of the execution link.
(9) Force Failed (FF) Node. At this moment, the decorator expression may be empty, forcibly making an appointment to output the execution state (failed) of the execution link.
(10) Guard (G) Node. At this moment, the decorator expression may be empty. When there is a failed node in the execution link, the execution state of the execution link is: failed.

While typical examples of different types of decorator nodes have been exemplarily described above, a person skilled in the art will appreciate that such descriptions are merely exemplary and are not intended to limit the scope of implementations of the present disclosure.

The type of the decorator node may be displayed in the first display area 401 of the decorator node 400, so as to be understood by the user. For example, "FF" may be displayed in a textual form in the first display area 401, and thus identified as a force failed node. In addition, a tag 407 may be arranged on the decorator node 400. The tag 407 is specifically an identifier of the decorator node 400 (e.g., FF123). A tag 408 for identifying the function block 403 may be arranged on the function block 403. A tag 409 for identifying the function block 404 may be arranged on the function block 404.

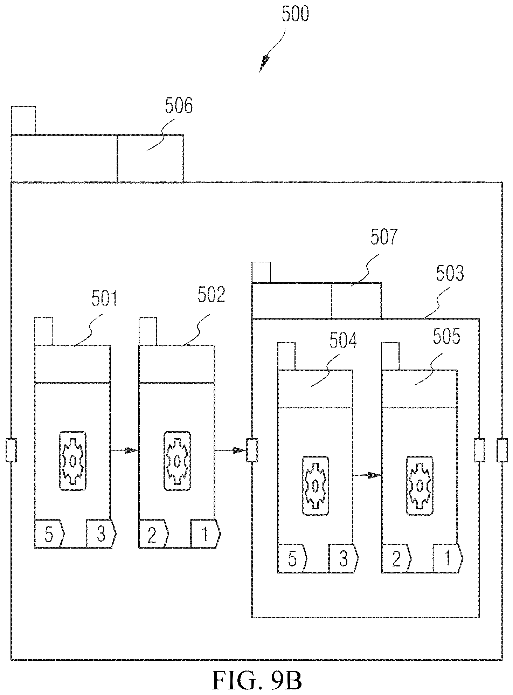

FIG. 9B is a second schematic diagram of a low-code paradigm of a decorator according to an embodiment of the present application. In FIG. 9B, a first decorator 500 includes a display area 506 on which a first decorative expression is displayed. The first decorator 500 further includes a first worklink composed of a function block 501, a function block 502, and a second decorator 503. An arrow extending from an output side of the function block 503 points to the function block 502, and an arrow extending from an output side of the function block 502 points to the second decorator 503. An execution process of the first worklink is specifically as follows: The function block 501, the function block 502, and the second decorator 503 are executed in sequence. By the first decorator expression, an execution condition, a number of executions, an execution time or an execution state, and the like of the first worklink may be constrained. The first decorator expression may be implemented as utilizing predefined control parameters as a function, formula or fixed value of an independent variable.

The second decorator 503 includes a display area 507 on which a second decorative expression is displayed. The second decorator 503 further includes a second worklink composed of a function block 504 and a function block 505. An arrow extending from an output side of the function block 504 points to the function block 505. An execution process of the second worklink is specifically as follows: The function block 504 and the function block 505 are executed in sequence. By the second decorator expression, an execution condition, a number of executions, an execution time or an execution state, and the like of the second worklink may be constrained. The second decorator expression may be implemented as utilizing predefined control parameters as a function, formula or fixed value of an independent variable.

Here, the first decorative expression and the second decorative expression may have different forms. It can be seen that implementations of the present disclosure also realize the nesting of decorators and enrich the control logic for worklinks.

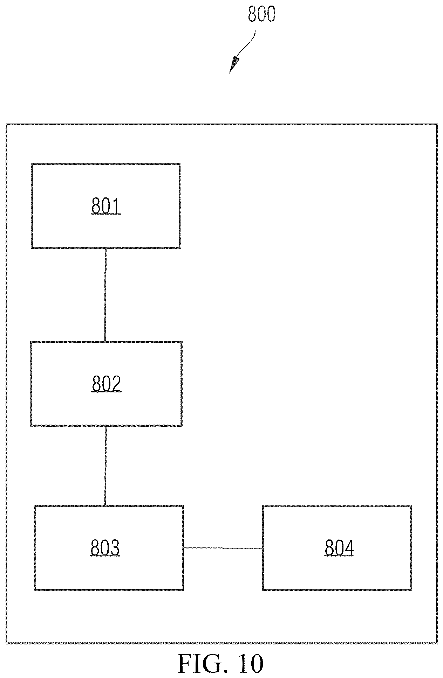

FIG. 10 is an exemplary structural diagram of a workflow generation apparatus according to various embodiments of the present application. A workflow generation apparatus 800 includes: a receiving module 801, configured to receive a behavior tree construction operation performed by a user on a graphical user interface, where the construction operation includes an addition operation for a behavior tree node, the behavior tree node includes a first decorator node, and the first decorator node includes a first worklink and a first decorative layer adapted to decorating the first worklink; a behavior tree generation module 802, configured to generate, in response to the behavior tree construction operation, a behavior tree including the first decorator node; and a workflow generation module 803, configured to parse the behavior tree to generate a workflow, where the workflow instructs the first worklink to work under the decoration of the first decorative layer.

In one implementation, the first decorative layer includes a first decorator expression, where the process of the first worklink working under the decoration of the first decorative layer includes at least one of the following: determining an execution condition of the first worklink based on the first decorator expression; determining a number of executions of the first worklink based on the first decorator expression; determining an execution time of the first worklink based on the first decorator expression; and determining an execution state of the first worklink based on the first decorator expression.

In one implementation, the first worklink includes a function block node. The function block node is configured to implement a service operation in the workflow. Alternatively, the first worklink includes a compositor node. The compositor node includes a start block adapted to starting executing the compositor node, an end block adapted to ending executing the compositor node, and a plurality of candidate worklinks arranged between the start block and the end block. The workflow also instructs to determine a destination worklink from the plurality of candidate worklinks based on a type of the compositor node. Alternatively, the first worklink includes a second decorator node. The second decorator node includes a second worklink and a second decorative layer adapted to decorating the second worklink, where the workflow instructs the second worklink to work under the decoration of the second decorative layer. Alternatively, the first worklink includes an iterator node. The iterator node includes an input end adapted to receiving an iterative item list, and an iterative worklink. The iterative item list includes a plurality of iterative items and an execution sequence of each iterative item, where the workflow also instructs each iterative item to execute the iterative worklink based on the respective execution sequence in the iterative item list during an execution process of the first worklink.

In one implementation, the apparatus further includes a deployment module 804. The deployment module is configured to deploy the workflow onto a runtime containing a workcell, such that the workcell performs operations according to the workflow, where the workflow is an OT domain workflow, and the workcell is an OT device.

Furthermore, embodiments of the present application also provide a computer-readable storage medium. The computer-readable storage medium has computer-readable code stored thereon. The computer-readable code, when executed by a processor, causes the processor to perform the foregoing workflow generation method. In addition, embodiments of the present application also provide a computer program product. The computer program product is tangibly stored on a computer-readable medium and includes computer-readable instructions. The computer-readable instructions, when executed, cause at least one processor to perform the steps of the workflow generation method in the embodiments of the present application. Embodiments of the present application also provide a workflow control system, which has a system structure similar to that in FIG. 5. The system may include: at least one memory 51, at least one processor 52, and at least one display 53. The at least one processor 52 is configured to call a computer program stored in the at least one memory 51 to perform the workflow generation method in the embodiments of the present application.

Specifically, a system or apparatus with a storage medium may be provided. The storage medium has computer-readable code stored thereon, which realizes the functions of any one implementation in the above embodiments, and a computer (or a CPU or an MPU) of the system or apparatus is caused to read out and execute the computer-readable code stored in the storage medium. Furthermore, some or all of actual operations may be completed by an operating system or the like operating on the computer via instructions based on the computer-readable code. The computer-readable code read out from the storage medium may also be written into a memory that is arranged in an expansion board inserted into the computer or into a memory that is arranged in an expansion unit connected to the computer. Subsequently, the instructions based on the computer-readable code cause the CPU or the like installed on the expansion board or the expansion unit to perform some or all of the actual operations, thereby realizing the functions of any one of the above implementations. In this embodiment, embodiments of a computer-readable medium include, but are not limited to, floppy disks, CD-ROM, magnetic disks, optical disks (e.g., CD-ROM, CD-R, CD-RW, DVD-ROM, DVD-RAM, DVD-RW, and DVD+RW), memory chips, ROM, RAM, ASIC, configured processors, all-optical media, all magnetic tapes, or other magnetic media, or any other medium from which a computer processor may read instructions. Furthermore, various other forms of computer-readable media may send or carry instructions to the computer, including a router, a private or public network, or other wired and wireless transmission devices or channels. For example, computer-readable instructions may be downloaded by a communication network from a server computer or a cloud. The instructions may include code in any computer programming language, including C, C++, C language, Visual Basic, java, and JavaScript.

It is to be noted that not all steps and modules in the processes and the diagrams of the system structures are necessary, and some steps or modules may be omitted according to an actual requirement. An execution sequence of the steps is not fixed and may be adjusted as required. The system structure described in the embodiments may be a physical structure or a logical structure. In other words, some modules may be implemented by the same physical entity, or some modules may be implemented by a plurality of physical entities, or may be implemented by some components in a plurality of independent devices together.

The foregoing descriptions are merely preferred embodiments of the present disclosure, but are not intended to limit the present disclosure. Any modification, equivalent replacement, or improvement made within the spirit and principle of the present disclosure shall fall within the protection scope of the present disclosure.

## Claims

1. A workflow generation method (700), comprising:
receiving a behavior tree construction operation performed by a user on a graphical user interface, the construction operation comprising an addition operation for a behavior tree node, the behavior tree node comprising a first decorator node, and the first decorator node comprising a first worklink and a first decorative layer adapted to decorating the first worklink (701);
generating, in response to the behavior tree construction operation, a behavior tree comprising the first decorator node (702); and
parsing the behavior tree to generate a workflow, wherein the workflow instructs the first worklink to work under the decoration of the first decorative layer (703).

2. The workflow generation method (700) according to claim 1, wherein the first decorative layer comprises a first decorator expression, wherein the process of the first worklink working under the decoration of the first decorative layer comprises at least one of the following:
determining execution condition of the first worklink based on the first decorator expression;
determining number of executions of the first worklink based on the first decorator expression;
determining execution time of the first worklink based on the first decorator expression; and
determining execution state of the first worklink based on the first decorator expression.

3. The workflow generation method (700) according to claim 1, wherein the first worklink comprises a function block node, the function block node being configured to implement a service operation in the workflow.

4. The workflow generation method (700) according to claim 1, wherein the first worklink comprises a compositor node, the compositor node comprising a start block adapted to starting executing the compositor node, an end block adapted to ending executing the compositor node, and a plurality of candidate worklinks arranged between the start block and the end block,
wherein the workflow also instructs to determine a destination worklink from the plurality of candidate worklinks based on a type of the compositor node.

5. The workflow generation method (700) according to claim 1, wherein the first worklink comprises a second decorator node, the second decorator node comprising a second worklink and a second decorative layer adapted to decorating the second worklink,
wherein the workflow instructs the second worklink to work under the decoration of the second decorative layer.

6. The workflow generation method (700) according to claim 1, wherein the first worklink comprises an iterator node, the iterator node comprising an input end adapted to receiving an iterative item list, and an iterative worklink, and the iterative item list comprising a plurality of iterative items and an execution sequence of each iterative item,
wherein the workflow also instructs each iterative item to execute the iterative worklink based on the respective execution sequence in the iterative item list during an execution process of the first worklink.

7. The workflow generation method (700) according to any one of claims 1 to 6, further comprising:
deploying the workflow onto a runtime containing workcell, such that the workcell performs operations according to the workflow, wherein the workflow is an OT domain workflow and the workcell is an OT device.

8. The workflow generation method (700) according to claim 2, wherein
the first decorator node is selected based on a selection operation performed by the user on the graphical user interface comprising a node library.

9. The workflow generation method (700) according to claim 8, wherein
the first decorator node comprises a first display area and a second display area, the first display area being adapted to displaying a type of the first decorator node and the second display area being adapted to displaying the first decorator expression.

10. A workflow generation apparatus (800), comprising:
a receiving module (801), configured to receive a behavior tree construction operation performed by a user on a graphical user interface, the construction operation comprising an addition operation for a behavior tree node, the behavior tree node comprising a first decorator node, and the first decorator node comprising a first worklink and a first decorative layer adapted to decorating the first worklink;
a behavior tree generation module (802), configured to generate, in response to the behavior tree construction operation, a behavior tree comprising the first decorator node; and
a workflow generation module (803), configured to parse the behavior tree to generate a workflow, wherein the workflow instructs the first worklink to work under the decoration of the first decorative layer.

11. The workflow generation apparatus (800) according to claim 10, wherein
the first decorative layer comprises a first decorator expression, wherein the process of the first worklink working under the decoration of the first decorative layer comprises at least one of the following:
determining execution condition of the first worklink based on the first decorator expression;
determining number of executions of the first worklink based on the first decorator expression;
determining execution time of the first worklink based on the first decorator expression; and
determining execution state of the first worklink based on the first decorator expression.

12. The workflow generation apparatus (800) according to claim 10, wherein
the first worklink comprises a function block node, the function block node being configured to implement a service operation in the workflow; or
the first worklink comprises a compositor node, the compositor node comprising a start block adapted to starting executing the compositor node, an end block adapted to ending executing the compositor node, and a plurality of candidate worklinks arranged between the start block and the end block, wherein the workflow also instructs to determine a destination worklink from the plurality of candidate worklinks based on a type of the compositor node; or
the first worklink comprises a second decorator node, the second decorator node comprising a second worklink and a second decorative layer adapted to decorating the second worklink, wherein the workflow instructs the second worklink to work under the decoration of the second decorative layer; or
the first worklink comprises an iterator node, the iterator node comprising an input end adapted to receiving an iterative item list, and an iterative worklink, and the iterative item list comprising a plurality of iterative items and an execution sequence of each iterative item, wherein the workflow also instructs each iterative item to execute the iterative worklink based on the respective execution sequence in the iterative item list during an execution process of the first worklink.

13. The workflow generation apparatus (800) according to any one of claims 10 to 12, further comprising:
a deployment module (804), configured to deploy the workflow onto a runtime containing a workcell, such that the workcell performs operations according to the workflow, wherein the workflow is an OT domain workflow, and the workcell is an OT device.

14. A workflow control system, comprising:
at least one memory (51), configured to store computer-readable code; and
at least one processor (52), configured to call the computer-readable code to perform the steps of the workflow generation method (700) according to any one of claims 1 to 9.

15. A computer-readable medium, the computer-readable medium having computer-readable instructions stored thereon, wherein the computer-readable instructions, when executed by a processor, cause the processor to perform the steps of the workflow generation method (700) according to any one of claims 1 to 9.

16. A computer program product, the computer program product being tangibly stored on a computer-readable medium and comprising computer-readable instructions, wherein the computer-readable instructions, when executed, cause at least one processor to perform the steps of the workflow generation method (700) according to any one of claims 1 to 9.
